# EUROPEAN PATENT SPECIFICATION

(11) **EP 3 701 412 B1**
(45) Date of publication and mention of the grant of the patent: **20.10.2021**
(21) Application number: 18811887.1
(22) Date of filing: 23.10.2018
(51) Int. Cl.: G06F 21/64, H04L 9/32

(54) **DATA STORAGE AND VERIFICATION**
DATENSPEICHERUNG UND -VERIFIKATION
STOCKAGE ET VÉRIFICATION DE DONNÉES

(30) Priority: 24.10.2017 GB 201717499
(43) Date of publication of application: 02.09.2020
(73) Proprietor: Copa Fin Limited, London NW7 2DQ (GB)
(72) Inventor: GALLAGHER-LYNCH, Alexander, London NW7 2DQ (GB); DANGERFIELD, Matthew Giles, London NW7 2DQ (GB)
(74) Representative: EIP
(86) International application number: PCT/GB2018/053064
(87) International publication number: WO 2019/081917

(56) References cited:
- Anonymous: "Blockchain - Wikipedia", , 19 October 2017 (2017-10-19), XP055542078, Retrieved from the Internet: URL:https://en.wikipedia.org/w/index.php?t itle=Blockchain&oldid=806033095 [retrieved on 2019-01-15]
- Gideon Greenspan: "MultiChain Private Blockchain - White Paper", , 1 December 2016 (2016-12-01), pages 1-17, XP055356077, Retrieved from the Internet: URL:http://web.archive.org/web/20161201162 629/http://www.multichain.com/download/Mul tiChain-White-Paper.pdf [retrieved on 2017-03-17]
- Bitfury Group ET AL: "Public versus Private Blockchains", , 20 October 2015 (2015-10-20), XP055381268, Retrieved from the Internet: URL:http://bitfury.com/content/5-white-pap ers-research/public-vs-private-pt1-1.pdf [retrieved on 2017-06-13]

## Description

### Technical Field

The present invention relates to methods for use with a distributed ledger network, for example for storing and verifying data records within a distributed ledger network. The present invention further relates to a distributed ledger network and to member nodes and control nodes of a distributed ledger network.

### Background

A blockchain network is an example of a distributed ledger network (DLN). A blockchain typically includes a continually growing list of records, encoded into blocks, with each block linked to a previous block. Blockchains may be considered to be a cryptographically secure chain of records, which includes a chained set of hashes. A hashing algorithm, also referred to as a message digest algorithm, such as the MD5 algorithm, can be applied to a record to produce a unique fingerprint. The hash of a record may be included in a block, and a hash of the block, or of at least the hash included in the block, may be added to a subsequent block. In this way, a chain of records may be generated, in which changes to a data record or sequence of records is readily detectable.

However, a malicious party wishing to change a record may be able to rewrite an entire chain. For example, with current processors, an entire chain of millions of records may be rewritten in minutes. Thus, if a malicious party wished to alter the millionth record, he or she could branch the chain of records at 999, 999, insert a new record and re-compute the hash values for the rest of the chain. On a centralized system, with one master copy of the data, verification of the data (for example by checking the hash values of the chain) would not detect that the chain of records had been altered.

A blockchain network, which as stated above is an example of a DLN, improves immutability by combining cryptographic hashing with distribution of the blockchain, which is thus stored by multiple nodes. A DLN generally includes a number of member nodes, which each store a copy of the ledger, once it has been synchronized across the network. There is typically no centralized point of failure in a DLN, thus increasing the immutability of data stored in such a network. Known DLNs include public DLNs, to which all users have access (providing they pay the required transaction fees) and private DLNs, to which only a limited set of trusted users have access. The document "MultiChain Private Blockchain -White Paper" by Dr Gideon Greenspan describes an off-the-shelf platform for the creation and deployment of private blockchains.

It is more difficult for a malicious party to tamper with any of the data records in a DLN. Generally, the security of a DLN increases as the number of member nodes connected to the DLN increases. For example, it may be possible to tamper with one copy of the distributed ledger stored at one member node or even all copies owned or stored by member nodes associated with one organization. However, it is more difficult, even virtually impossible, to tamper with copies stored across many organizations, especially if they are stored in various different networks and/or security infrastructures.

In known blockchain networks, publishing of data records to the DLN takes time and significant expenditure of computing resources and energy. For example, public blockchain networks such as Bitcoin and Ethereum currently rely on as consensus-based algorithm, using so-called mining nodes to complete a proof of work (PoW) requirement, such as the generation of a double hash value with a specified number of leading zero bits, before a new record is published to the network. Typically, for a standard request it can take in the region of nine minutes for the PoW requirement to have been met by a mining node, but the publication time can be higher or lower depending on the level of transaction fees paid. Moreover, two member nodes may meet the PoW requirement at the same time and may therefore each create a block at the same time. In such cases, each member node may individually choose which block to accept, which is generally the first block received at a member node. This may therefore cause the blockchain to fork into two different branches. As each branch develops, the shorter branch of the fork may eventually be discarded, thus requiring more time in order for the records in the shorter branch of the fork to be integrated into the blockchain.

These drawbacks are not limited to blockchain networks using PoW; similar ones also exist in DLNs using other types of consensus-based algorithms for publication to the network, such as proof of stake (PoS).

### Brief Description of the Drawings

Further features will become apparent from the following description, given by way of example only, which is made with reference to the accompanying drawings.
Figure 1 shows schematically an example of a DLN;
Figure 2 is a schematic diagram showing an example of internal components of a first member node of a DLN according to examples;
Figure 3 shows schematically an example of the data structure of Figure 2, for storing data at a first member node of a DLN;
Figure 4 shows schematically a cross-section through the first and second rows of the data structure of Figure 3;
Figure 5 is a flow diagram illustrating an example of generating a hash value for a first block of a first blockchain;
Figure 6 is a flow diagram illustrating an example of generating a hash value from a set of hash values;
Figure 7 is a flow diagram illustrating an example of generating a new hashblock based on a new block;
Figure 8 is a flow diagram illustrating an example of allocating a first node identifier to a first member node of a DLN;
Figure 9 is a flow diagram illustrating the creation of a first block at a first member node according to examples;
Figure 10 is a flow diagram illustrating the receipt of a first block at a first member node according to examples;
Figure 11 is a flow diagram illustrating an example of validation of a block according to examples;
Figure 12 is a flow diagram illustrating an example of validation of a blockchain according to examples;
Figure 13 is a flow diagram illustrating an example of receiving a new blockchain at a first member node;
Figure 14 is a flow diagram illustrating an example of updating a blockchain at a first member node;
Figure 15 is a flow diagram illustrating an example of updating a blockchain at a second member node;
Figure 16 is a flow diagram illustrating an example of updating a data structure at a first member node;
Figure 17 shows schematically an example of internal components of a member node of a DLN according to examples;
Figure 18 shows schematically an example of broadcasting of data using a UDP broadcaster module;
Figure 19 shows schematically an example of receiving data using a UDP receiver module;
Figure 20 is a flow diagram illustrating an example of storing data; and
Figure 21 is a flow diagram illustrating an example of verifying data.

### Detailed Description

Details of systems and methods according to examples will become apparent from the following description, with reference to the Figures. In this description, for the purpose of explanation, numerous specific details of certain examples are set forth. Reference in the specification to "an example" or similar language means that a particular feature, structure, or characteristic described in connection with the example is included in at least that one example, but not necessarily in other examples. It should further be noted that certain examples are described schematically with certain features omitted and/or necessarily simplified for ease of explanation and understanding of the concepts underlying the examples.

First examples described herein provide a method for synchronizing data within a distributed ledger network comprising a plurality of member nodes connected via a data communications system. The method in these examples includes, at a first member node, storing first storage data representing blocks of a first blockchain and second storage data representing blocks of at least a second blockchain. The first blockchain is extended in response to at least one block being created at the first member node and data representing the at least one block is added to the first storage data. Outbound synchronization data is transmitted to at least one other member node of the distributed ledger network, the outbound synchronization data comprising data representative of the at least one block. Inbound synchronization data is received from a second member node of the distributed ledger network, the inbound synchronization data comprising data representative of one or more blocks of the second blockchain. The data representing the one or more blocks of the second blockchain is stored at the first member node. For example, the data representing the one or more blocks of the second blockchain may be added to the second storage data. In examples such as this, the first member node may be configured to be a primary or sole source for blocks of the first blockchain. This may avoid two blocks of the first blockchain being created simultaneously by different member nodes (as one member node can readily control the generation of blocks in sequence order), without the need for a consensus-based algorithm for the publication of a block to the DLN, which can avoid delays which are associated with consensus-based algorithms and can also avoid forking of the first blockchain. The first examples further include transmitting a given type of outbound synchronization data, transmissions of the given type of outbound synchronization data being separated by respective time intervals, wherein during a time interval between one, and the next transmission of the given type of outbound synchronization data, a plurality of blocks of said first blockchain are created, and wherein said next transmission comprises data representing said plurality of blocks.

Some examples herein include receiving a first node identifier associated with the first member node, selecting the first blockchain from the first blockchain and at least the second blockchain based on the first node identifier and, in response to the selecting, extending the first blockchain by storing the at least one block as part of the first blockchain. This for example allows the first blockchain to be uniquely associated with the first node, which may allow the first node to act as a primary or sole source of blocks for the first blockchain.

Second examples described herein provide a first member node for a distributed ledger network. In the second examples, the first node includes storage configured to store first storage data representing a first blockchain, the first blockchain comprising a first continuous sequence of blocks, the first continuous sequence of blocks having been created at the first member node. The storage is also configured to store second storage data representing at least a second blockchain, the second blockchain comprising a second continuous sequence of blocks, the second continuous sequence of blocks having been created at the second member node. In these examples, the first member node may be configured to be a primary or sole source of blocks for the first blockchain and the second member node may be configured to be a primary or sole source of blocks for the second blockchain. The first member node according to the second examples is further configured to transmit at least a given type of outbound synchronization data to at least one other member node of the distributed ledger network, the outbound synchronization data comprising data representative of a first block pf the first continuous sequence of blocks, transmissions of the given type of outbound synchronization data being separated by respective time intervals, wherein during a time interval between one, and the next transmission of the given type of outbound synchronization data, a plurality of blocks of said first blockchain are created, and wherein said next transmission comprises data representing said plurality of block

Some examples herein include storing a first blockchain, the first blockchain including a first set of blocks arranged in sequence and storing a second blockchain, the second blockchain including a second set of blocks arranged in sequence. Verification data which links at least some data from a block in the first blockchain and at least some data from a block in the second blockchain is generated and the verification data is stored. In these examples, the first and second blockchains may be independently generated, with the verification data linking the blocks of the first and second blockchains providing immutability for both blockchains. Such improved immutability is for example achieved by synchronizing the first and second blockchains, along with the verification data, within a DLN.

Some examples herein include verifying data including retrieving at least some data from a block in a first blockchain, the first blockchain comprising a first set of blocks arranged in sequence, retrieving at least some data from a block in a second blockchain, the second blockchain comprising a second, different, set of blocks arranged in sequence and retrieving verification data which links the block in the first blockchain and the block in the second blockchain. These examples include performing a cryptographic verification algorithm with the at least some data from the block in a first blockchain, and the at least some data from the block in a second blockchain, as inputs to the cryptographic verification algorithm and comparing the output of the cryptographic verification algorithm with the verification data in order to verify at least one of the block in the first blockchain and the block in the second blockchain. These examples therefore allow data from first and second blockchains that may have been independently generated to be subsequently verified for data integrity. Immutability is improved in situations in which the first and second blockchains, along with the verification data, are distributed across a DLN.

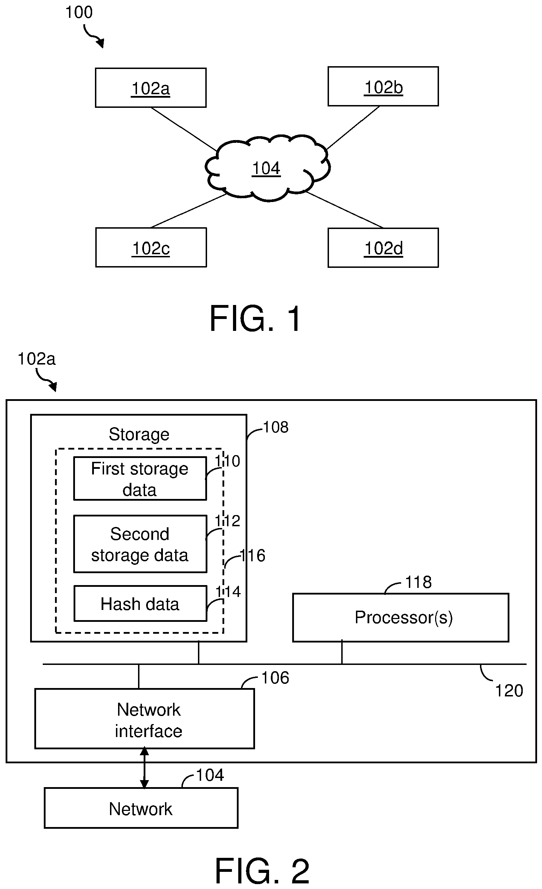

To put these examples into context, examples of a distributed ledger network (DLN) 100 will be described, first with reference to Figure 1.

The DLN 100 in this example is a private DLN, to which only a limited set of trusted users have access. The DLN 100 includes a plurality of member nodes 102, in this example a first member node 102a, a second member node 102b, a third member node 102c and a fourth member node 102d. A user is associated with a particular member node 102. The DLN 100 also includes one or more DLN control nodes for controlling access to the DLN, since the DLN in this example is a private network, and for providing various network functions such as data verification. DLN control nodes may be associated with a DLN member node. For example, a DLN control node may have an associated DLN member node, local to the DLN control node, from which the DLN control node can access or retrieve data, without having to request the data from a remote DLN member node. Copies of data held within a distributed ledger associated with the DLN may be stored at, or by, each of the member nodes 102. Both DLN member nodes and DLN control nodes may store copies of the distributed ledger or part of the distributed ledger or DLN control node may instead retrieve copies of all or part of the distributed ledger from one or more DLN member nodes (as described above).

A DLN node (which may be a DLN member node or a DLN control node), which is a computing node, can take a variety of forms, including devices such as a server computer, a desktop computer, a laptop computer, or a smartphone computing device. A DLN node may therefore be any suitable computing device, such as any electronic device with appropriate processing capability for processing or interacting with a distributed ledger, such as a central processing unit (CPU), or dedicated software or hardware such as a suitably programmed field programmable gate array (FPGA) or application specific integrated circuit (ASIC).

Alternatively, a DLN node may be implemented by a distributed collection of devices interconnected by a network, for example a local area network. Where a DLN node is implemented by different entities, each having a separate corporate network, for example a local area network (LAN) protected by a firewall, at least a part of the DLN node which may be queried by one or more remote DLN nodes, may be located in a demilitarized zone (DMZ) outside the main firewall of the corporate network.

Each DLN node may be operated by a different user or organization or a user or organization may control or operate a number of different DLN nodes.

The DLN 100 of Figure 1 is a decentralized, and distributed, system, in which the DLN member nodes 102 can communicate with each other via a data communications network 104. The network 104 may include private network links and/or public network links, and may include a plurality of interconnected networks.

Each of the member nodes 102 may have integrated or externally-coupled wired networking capabilities. Alternatively, or in addition, each of the member nodes 102 may have integrated or externally-coupled wireless networking capabilities, using wireless telecommunications systems such as those using the Long Term Evolution (LTE) standards. The member nodes may in turn be connected to a series of one or more networks comprising servers, routers and other networking equipment that communicate using the Internet Protocol (IP) protocol. One or more of the member nodes 102 may include virtual devices implemented on underlying physical computing hardware.

Figure 2 provides an overview of examples of internal components for an example computing device for use as a member node of a DLN, such as the first member node 102a of the DLN 100 of Figure 1.

The first member node 102a of Figure 2 is a computing device that includes a network interface 106 to communicate with the network 104, such that the first member node 102a may form part of the DLN 100. The network interface 106 of the first member node 102a may include software and/or hardware components, such as a virtual network interface, an Ethernet port, a software driver and/or communications stack interacting with network hardware.

Storage 108 of the first member node 102a in the example of Figure 2 is configured to store data of the distributed ledger. In this example, the storage 108 stores first storage data 110 representing a first blockchain, the first blockchain comprising a first continuous sequence of blocks of a first blockchain, the first continuous sequence of blocks created at the first member node 102a, and second storage data 112 representing at least a second blockchain, the second blockchain comprising a second continuous sequence of blocks created at a second member node 102b of the DLN. The first blockchain may include solely blocks created at the first member node 102a and the second blockchain may include solely blocks created at the second member node 102b. In such cases, the first and second member nodes 102a, 102b may be considered to be the sole source of blocks for the first and second blockchains, respectively. The second storage data 112 may also represent all other blockchains of the DLN, the other blockchains comprising further continuous sequences of blocks created at all other member nodes of the DLN

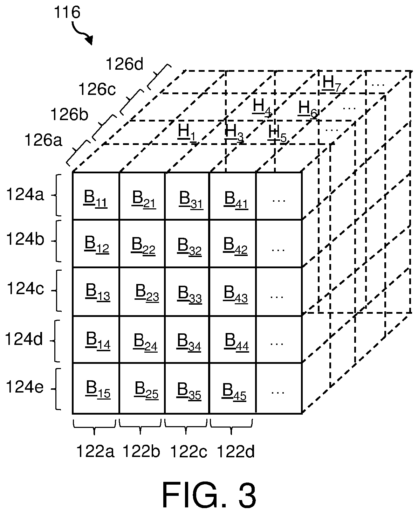

The storage 108 of Figure 2 also stores verification data in the form of hash data 114 (described further below with reference to Figure 3). The first storage data 110, the second storage data 112 and the hash data 114 are stored in a logical data structure 116 as shown in Figure 2, although the first storage data 110, the second storage data 112 and the hash data 114 may be stored in a variety of arrangements of appropriately linked fields in the storage 108.

The storage 108 may include at least one of volatile memory, such as a Random Access Memory (RAM) and non-volatile memory, such as magnetic, optical or tape media, or a solid state drive (SSD) such as Flash memory. The storage 108 may be local to, or remote from, the member node 108. In examples, the storage 108 may be cloud storage.

At least one processor 118 is communicatively coupled to the storage 108 in the first member node 102a of Figure 2. The at least one processor 118 in the example of Figure 2 may be a microprocessor, a general purpose processor, a digital signal processor (DSP), an application specific integrated circuit (ASIC), a field programmable gate array (FPGA) or other programmable logic device, a discrete gate or transistor logic, discrete hardware components, or any suitable combination thereof designed to perform the functions described herein. A processor may also be implemented as a combination of computing devices, e.g., a combination of a DSP and a microprocessor, a plurality of microprocessors, one or more microprocessors in conjunction with a DSP core, or any other such configuration.

The storage 108 in the example of Figure 2 may include computer program code configured to, when processed by the at least one processor 118, implement the methods described herein. This computer program code may be stored in an accessible non-transitory computer-readable medium and loaded into memory, for example the storage 108, to implement the methods described herein.

The components of the first member node 102a in the example of Figure 2 are interconnected using a systems bus 120. This allows data to be transferred between the various components. For example, the first storage data 110 may be transmitted to other member nodes or control nodes of the DLN 100 by transferring the first storage data 110 from the storage 108, via the systems bus 120, to the network interface 106 for transmission to the network 104.

Figure 3 shows schematically an example of the data structure 116 of Figure 2, which may be used to store first and second storage data 110, 112 and hash data 114 (although other data structures may be used in other examples). The data structure 116 may be referred to as a blockmatrix structure. A blockmatrix may be considered to be a matrix of independent blockvectors 122a, 122b, 122c, 122d and hashvectors H₁, H₃, H₄, H₅, H₆, H₇ that cross-link the blockvectors; these terms are described further below. A blockmatrix may be represented by an *n* × *k* × *m* matrix, where *n, k* and *m* are integers, and *n* is the length of the longest blockvector, *k* is the blockvector index number (or the number of blockvectors within the blockmatrix) and m is the hash check depth (which may be considered to correspond with the number of generations of hash checks that are made, as described further below).

In examples such as that shown in Figure 3, the data structure 116 is a multidimensional data structure, for example a data structure with three or more dimensions. The multidimensional data structure may be arranged in a form including a plurality of columns, a plurality of rows and a plurality of layers. In Figure 3, each column corresponds with a blockvector labelled with the reference numerals 122a, 122b, 122c, 122d. The rows of Figure 3 are labelled with the reference numerals 124a, 124b, 124c, 124d, 124e and the layers of Figure 3 are labelled with the reference numerals 126a, 126b, 126c, 126d.

The first storage data may include a first column of data of the plurality of columns of data, which is to be found in a first layer of the plurality of layers and in a first number of rows of the plurality of rows corresponding to a number of blocks of the first blockchain. In the illustrative example of Figure 3, the first storage data includes the first blockvector 122a (which corresponds with the first column), in the rows 124a, 124b, 124c, 124d, 124e (as the first blockchain in this example has five blocks) and in the first layer 126a. In such examples, the second storage data may include a second column of data of the plurality of columns of data, which is to be found in the first layer of the plurality of layers and in a second number of rows of the plurality of rows corresponding to a number of blocks of the second blockchain. In Figure 3, the second storage data includes the second blockvector 122b (which corresponds with the second column), in the rows 124a, 124b, 124c, 124d, 124e (as the second blockchain also has five blocks in this example) and in the first layer 126a. Thus, the first storage data may correspond to one column of the multidimensional data structure and the second storage data may correspond to all other columns of the multidimensional data structure. A column index of the multidimensional data structure may correspond to a VectorIndex associated with the first storage data or the second storage data, which in turn may correspond to a node identifier associated with the first node, and node identifiers associated with all other member nodes (including the second member node) respectively.

In such examples, hash data (for example in the form of hashvectors H₁, H₃, H₄, H₅, H₆, H₇) may be stored in a second layer of the plurality of layers different from the first layer. This is shown in Figure 3, in which the hashvectors H₁, H₃, H₅ are stored in the second layer 126b of the data structure 116. In this example, there are additional hashvectors stored in additional layers of the data structure (in the layers 126c, 126d of Figure 3), with each additional layer corresponding to an additional generation of a hash check. Thus, in the example of Figure 3, as there are three layers 126b, 126c, 126d that store hashvectors, the hash check depth of this example is three.

This may be generalized for a data structure or blockmatrix represented by an *n* × *k* × *m* matrix. In such cases, the portions of the blockmatrix with *m* = 1 (corresponding to the first layer 126a of Figure 3) may solely include blockvectors and may not include hashvectors. Conversely, the portions of the blockmatrix with *m* ≠ 1 (corresponding to the layers 126b, 126c, 126d in Figure 3) may solely include hashvectors and may not include blockvectors.

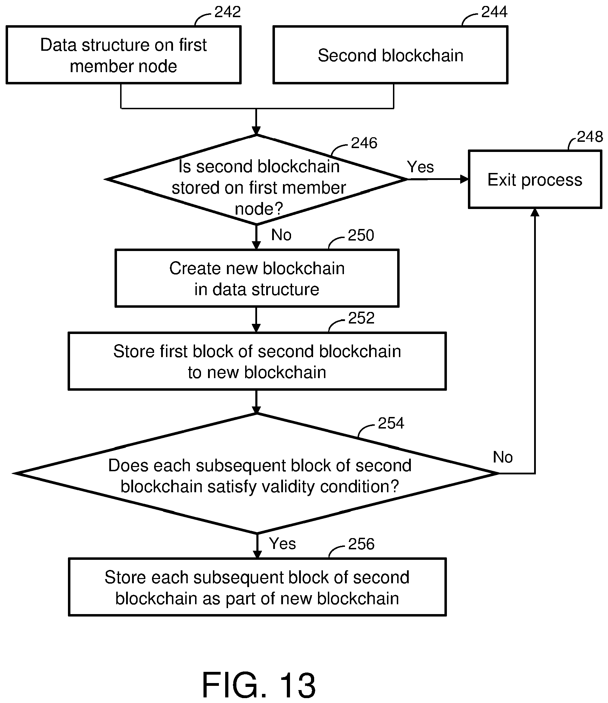

A member node such as the first member node 102a may store a current version of the blockmatrix (which may be similar to the data structure 116 shown in Figure 3). Different parts of the blockmatrix may be stored locally, on a local network and/or remotely in cloud storage. As will be appreciated from the above description, herein, the current version of the blockmatrix as stored by a member node is referred to as "storage data" and a version of the blockmatrix as received from another member node, or at least one or more blocks or other elements of the blockmatrix as received from another member node, is referred to as synchronization data. A member node may identify from synchronization data that it receives, data representing a block which is not currently held in its storage data, and add it to its storage data blockmatrix, hence updating the blockmatrix version held by, or on behalf of the member node. This is described further below with reference to FIGS. 13 to 15.

Referring back to Figure 3, a blockvector such as the blockvectors 122a, 122b, 122c, 122d may be considered to correspond to a single dimensional blockchain, such as a blockchain with no forks. A blockchain is a cryptographically secure chain of data records. Each blockchain (or blockvector) includes a sequence of blocks, which may be considered to be a one-dimensional series of blocks.

A block of a blockchain, such as the blocks B₁₁, B₁₂, B₁₃, B₁₄, B₁₅ of the first blockvector 122a (which may be referred to interchangeably herein as the first blockchain), may comprise a data record and verification data which is associated with the data record in order to provide verification of integrity. The verification data may include a cryptographic hash of the data record of the block.

Hashing herein refers to cryptographic hashing, the output of which is referred to as a hash, or message digest. A hash may be generated by a one-way cryptographic hashing algorithm, for example MD5 or SHA-256, operating on input data, such as a data record. The output is deterministic, in that application of the hashing algorithm again to exactly the same input data will produce the same hash. The output is one-way in that the original data record cannot be recovered from the hash alone, even with full knowledge of the hashing algorithm. The generated hash may be of a fixed length.

A further type of hashing algorithm, for example the keyed-hash message authentication code (HMAC) uses a cryptographic key, which may be a random number, in combination with a data record, as the input data. In this way different outputs may be generated from the same data record, in order to prevent third parties from detecting the same data record being hashed repeatedly. However, knowledge of the cryptographic key is required to verify the data record integrity by repeating the hashing procedure and comparing it to the stored hash.

Verification of the integrity of each data record in a blockchain can be performed by re-computing the hashes of blocks to be checked, beginning with the oldest to be checked, and performing a match with each respective hash stored in the blockchain. Hence, if anywhere in the chain a single data record is changed, or overwritten, after a blockchain has been generated, the hash stored with it in the block will not match the hash that is recomputed. The hash stored with it in the block could also be overwritten with a recomputed hash, however then the hash recalculated for the next block in the blockchain, which takes the hash of the previous block as on input, would then not match the hash stored in the subsequent block. Thus, in order to alter a single record in a blockchain without discoverability, every hash in every block subsequent to that data record would need to be overwritten, otherwise at least one hash in the blockchain would not re-compute correctly, and it can thus be detected that one or more data records have been changed. Adding a block to a blockchain provides a level of immutability to the data, in that it can be checked whether a data record has been altered or not, providing it is difficult to alter all the records in a blockchain. Such immutability can be achieved by storing copies of the blockchain in a distributed ledger, such as that illustrated schematically in Figure 1 and described further below.

A block may also include other associated metadata, for example a timestamp and a hash pointer which links the block to a previous block in the blockchain (such as the block immediately previous to the block). A block may also include a sequence number which indicates the position of the block in the blockchain.

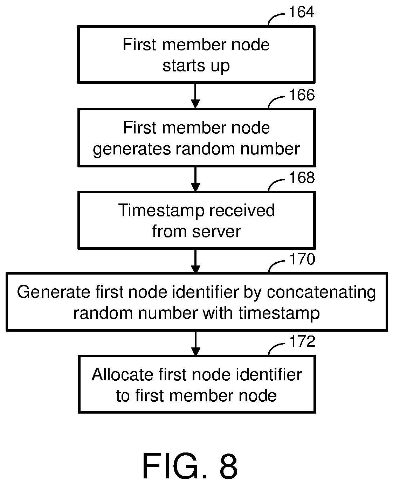

In an illustrative example, a block includes the following data fields:
- BlockIndex (Type = BigInteger)
- VectorIndex (Type = BigInteger)
- TimeStamp (Type = TimeStamp)
- PreviousHash (Type = String)
- BlockData (Type = String)
- BlockHash (Type = String).
   In this example, the BlockIndex denotes the location of the block in the blockvector (and may therefore correspond with the sequence number of the block) and the VectorIndex denotes which blockvector each block belongs. The VectorIndex for blocks generated or created at a given member node of the DLN may be assigned to the member node when the member node is started or initialized, as described further with reference to Figure 8. The TimeStamp is the time at which the block was created, which may be accurate to the picosecond scale. The PreviousHash denotes the hash of the previous block in the sequence. The BlockData denotes the data record stored by the block. There may be no predefined size limit for the BlockData. The BlockHash denotes the hash of the block.

Thus, in the example of Figure 3, the block B₁₂ of the first blockvector 122a includes a hash of the data record associated with the block B₁₂, as well as the hash of the previous block B₁₁ of the first blockvector 122a. The hash of the previous block B₁₁ may therefore be considered to be a hash pointer linking the block B₁₂ to the block B₁₁.

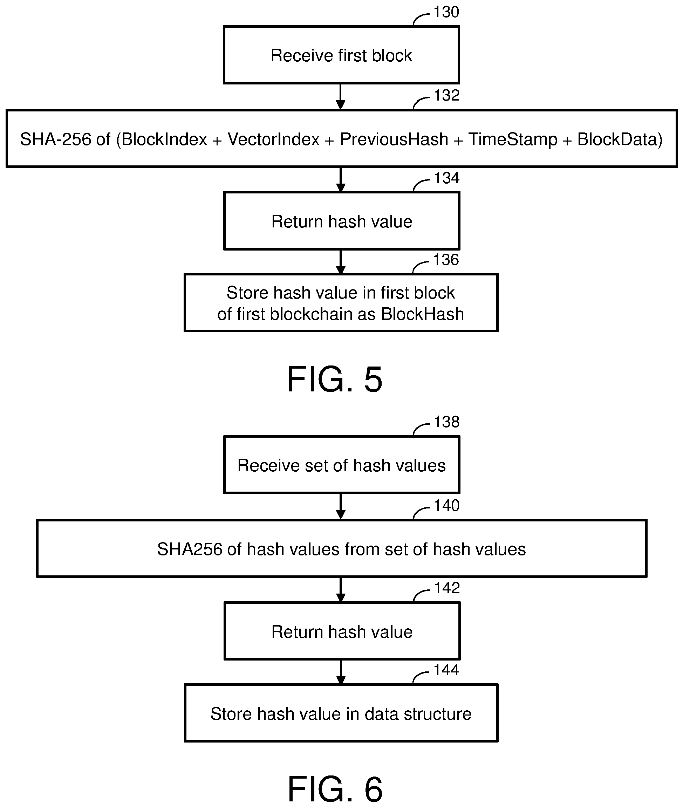

An example flow chart illustrating the generation of the BlockHash value is shown in Figure 5. At item 130 of Figure 5, the first block is received. With reference to Figure 3, the first block may for example be the block B₁₁ of the first blockvector 122a. At item 132 of Figure 5, a hash value is generated. In this example, the hash value is generated by concatenating the BlockIndex, the VectorIndex, the PreviousHash, the TimeStamp and the BlockData and providing this as an input to the SHA-256 hashing algorithm (although other algorithms may be used in other examples). At item 134, the hash value is returned and at item 136 the hash value is stored in the first block B₁₁ of the first blockvector 122a (which in this example corresponds to a first blockchain) as the BlockHash value, which is a string in this example.

To summarise, herein, a set of data referred to as a blockvector is a type of blockchain. Herein, a set of data referred to as a blockmatrix comprises a set of blockchains, or blockvectors, which are additionally cryptographically secured by the secure linking of data records across blockchains, This may be achieved by taking as input data, data from each of two corresponding blocks from respective blockchains, to generate verification data which can be used to check the integrity of both blocks. The verification data may include a hash generated from input data including each respective block. The resulting verification data is referred to herein as a hashblock. These hashblocks may be arranged in blockvectors, and may include various levels (or generations) of verification data such that a hashblock can represent validation data for blocks in any number of blockvectors, 2 or above, depending on the level of the hashblock in the blockmatrix, until a final hashblock is reached which represents a "golden hash" of each of the blockvectors in the blockmatrix. The hashblocks may be arranged in a diagonal matrix, which allows an arbitrary number of blockvectors to be validated using a hashblock from a selected level within the blockmatrix. This allows for any number of blockvectors to be represented efficiently in the blockmatrix.

A hashblock may be considered to be a unit from which hashvectors are built. The purpose of hashblocks is, for example, to join or chain blocks and blockvectors, blocks and blocks and/or blocks and hashblocks to allow blockvectors to be verified. Hashblocks may have a similar structure to blocks. An example of data fields of a hashblock is as follows:
- HashBlockIndex (Type = BigInteger)
- HashVectorIndex (Type = Biglnteger)
- TimeStamp (Type = TimeStamp)
- HashChildren (Type = String)
- PreviousHashData (Type = String)
- HashData (Type = String).
   In this example, the HashBlockIndex denotes the location of the hashblock in the hashvector and the HashVectorIndex denotes which hashvector the hashblock belongs to. The HashVectorIndex may be generated dynamically as new hashvectors are generated, for example based on the HashChildren, HashVectorIndex or BlockVectorIndex. The TimeStamp is the time at which the hashblock was created, which may be accurate to the picosecond scale. The HashChildren includes the hashes that were used to generate the HashData. The PreviousHashData denotes the hash of the previous hashblock in the sequence. The HashData denotes the hash of the previous hashblock, the BlockHash of the block and/or the HashData of the hashblock to be chained.

The generation of a hash of a hashblock may be generated in the same way as the generation of a hash of a block. For example, a hash of a hashblock may be generated by inputting the concatenation of the HashBlockIndex, the HashVectorIndex, the TimeStamp, the HashChildren and the Previous Hash to a hashing algorithm such as the SHA-256 hashing algorithm and taking the output as the hash of the hashblock.

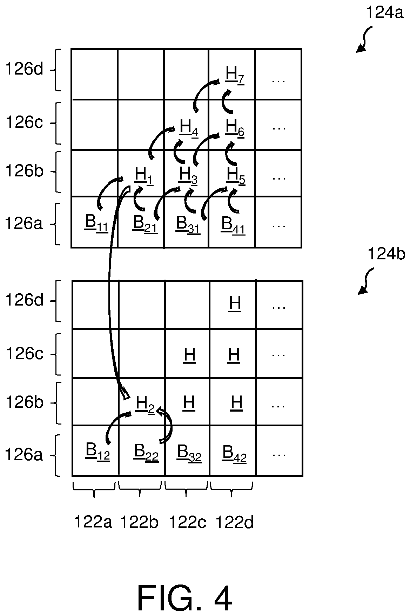

Figure 6 is an example flow chart illustrating an example of generating a HashData value. At item 138 of Figure 6, a set of hash values is received. The set of hash values received will depend on where the hashblock is located within the blockmatrix. For example, the set of hash values may include the hash values for immediately neighbouring blocks or hashblocks (as will be described further below with reference to Figure 4). At item 140 of Figure 6, a hash value is generated. In this example, the hash value is generated by supplying the concatenation of the hash values of the set of hash values as an input to the SHA-256 hashing algorithm (although other algorithms may be used in other examples). At item 142 of Figure 6, the hash value is returned and at item 144 of Figure 6, the hash value is stored in the data structure, for example in a hashblock as a BlockHash value, which may be a string. As the method of Figure 6 may receive hashes of both blocks or hashblocks as inputs, this method may therefore be used to chain a hybrid of blocks and hashblocks.

An illustrative example of chaining blocks and hashblocks together is shown in Figure 4, which illustrates schematically the first and second rows 124a of the data structure 116 of Figure 3. In Figure 4, the first blockvector 122a and the second blockvector 122b have been processed to generate hash data representative of a hash H₁ based on a first block B₁₁ of the first blockchain (which in this example corresponds with the first blockvector 122a) and a second block B₂₁ of a second blockchain (which in this example corresponds with the second blockvector 122b). This processing may be performed at the first member node 102a. For example, the first storage data (which may be considered to represent at least the first block B₁₁) the second storage data (which may be considered to represent at least the second block B₂₁) and the hash data (which may be considered to represent at least the hash Hi) may be stored as part of a data structure at the first member node 102a.

Referring back to Figure 4, it can be seen in this example that the hash value Hi crosslinks the first block B₁₁ of the first blockchain with the second block B₂₁ of the second blockchain. Other hash values, such as the hash values H₃, H₅ of Figure 4, may link other blocks of neighbouring blockchains (which in this example correspond with blockvectors). For example, H₃ corresponds to a hash of the second block B₂₁ of the second blockchain and a neighboring block B₃₁ of the third blockchain and H₅ corresponds to a hash of the block B₃₁ of the third blockchain with the neighbouring B₄₁ of the fourth blockchain, where the third and fourth blockchains correspond to the first and fourth blockvectors 122c, 122d respectively.

In examples such as Figure 4, the first block B₁₁ cross-linked by the hash value to the second block B₂₁ is in the same row (the first row 124a) as the second block B₂₁. For example, the first block B₁₁ may be stored at a first position in the first blockchain and the second block B₂₁ may be stored at the first position in the second blockchain. In other words, the first block B₁₁ and the second block B₂₁ may have the same BlockIndex as each other but a different VectorIndex.

The hash value cross-linking the first block B₁₁ to the second block B₂₁ may be a first hash value representative of a first hash H₁. In cases such as this, the first member node 102a may store a set of hash data representative of a set of hash values including the first hash value and a second hash value representative of a second hash H₂ based on the first hash H₁, a third block B₁₂ of the first blockchain stored at a second position in the first blockchain and a fourth block B₂₂ of the second blockchain stored at the second position in the second blockchain. In the example of Figure 4, the second position corresponds with the second row 124b of the blockmatrix and the first position corresponds with the first row 124a of the blockmatrix. Thus, in examples such as this, the set of hash values may include hash values linking different rows of the blockvectors or blockchains.

The set of hash values may also include hash values cross-linking hashblocks with other hashblocks. For example, the blockmatrix (or data structure) may include third storage data representing a third continuous sequence of blocks of a third blockchain, the third continuous sequence of blocks created at the third member node 204c of the DLN 100. In FIGS. 3 and 4, the third storage data is representative of the third blockvector 122c, which corresponds with the third column of the data structure 116. A third hash H₃ between the second block B₂₁ of the second blockchain and a fifth block B₃₁ of the third blockchain with the first index (for example in the same row as the second block B₂₁ of the second blockchain) may be calculated. In the example of FIGS. 3 and 4, the third hash H₃ is also stored as part of the data structure 116, in the third column, the first row 124a and the second layer 126c. However, in other examples, the data structure may not include the third hash. In examples such as FIGS. 3 and 4, the data structure may also store fourth hash data representative of a fourth hash value representative of a fourth hash H₄ between the first hash H₁ and the third hash H₃. The fourth hash H₄ may be stored in a different layer of the data structure 116 than the hashes used to generate the fourth hash H₄. In FIGS. 3 and 4, the fourth hash H₄ is stored in the third layer 126c whereas the first hash H₁ and the third hash H₄ are stored in the second layer 126b. By cross-linking hashblocks with other hashblocks, the data structure 116 may provide additional security and verification than otherwise. For example, each additional layer of the data structure 116 may correspond to an additional hash check, incrementally increasing the security with each additional layer.

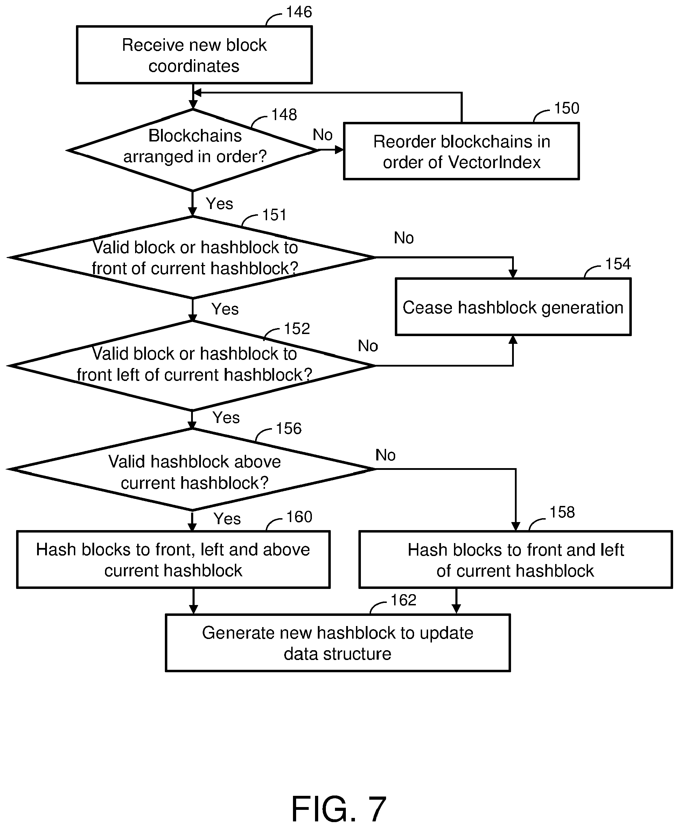

An example of generating a new hashblock upon receipt of a new block at a blockmatrix of the first member node 102a is illustrated in the flow diagram of Figure 7.

At item 146 of Figure 7, the coordinates of a new block within the blockmatrix are received at the first member node 102a. The coordinates may be received in response to the new block being created at the first member node 102a or in response to the new block being received from another member node of the DLN and subsequently added to the blockmatrix. The precise format of the coordinates will depend on the form of the blockmatrix. However, if the blockmatrix is of the form shown in Figure 3, the coordinates will be in the form *(n, k, m),* where *n* is the length of the longest blockvector, *k* is the blockvector index number (or the number of blockvectors within the blockmatrix) and m is the hash check depth.

Blockchains at a member node of the DLN may be processed in a predetermined order. For example, each member node of the DLN may include a blockmatrix builder that includes a block ordering algorithm that orders the blockvectors in a predetermined order. The block ordering algorithm may be common to each DLN such that, when corresponding blocks, from adjacent blockvectors in the blockmatrix, are chained together, the same resulting hashblock is created. Hence, each member node is able to verify the integrity of a blockmatrix that it has stored against a blockmatrix that may be received from a remote member node of the DLN. The blockchains may be ordered for example according to a member node identifier (described further below with reference to Figure 8), which may be considered to correspond to a second dimension. As shown in Figure 4, blocks from blockchains having a predetermined relationship in the array of blockchains (such as adjacent blockchains) may also be chained together, with the hashblocks generated corresponding to a third dimension of a multi-dimensional data structure for example.

Hence, the method of Figure 7 involves, at item 148 of Figure 7, checking whether the blockchains (or blockvectors) of the blockmatrix are arranged in a predetermined order at the first member node 102a. The predetermined order is for example based on the node identifier (or VectorIndex) associated with the member node at which the respective blockvector was created. As node identifiers may be generated based on a synchronous time source (e.g. an atomic clock) identifying a time corresponding to when the corresponding member node joined the DLN, each subsequent node identifier (for each subsequent member node that joins the DLN) may be larger than previous node identifiers for member nodes that have previously joined the DLN. As each blockvector may be associated with a node identifier (which for example corresponds with the member node at which the blockvector was created), the blockvectors may be arranged based on node identifier, from the smallest to the largest (i.e. representing the oldest to the youngest member node). As there will have been more time to add new blocks to the oldest blockvectors, the longest blockvectors (i.e. the longest blockchains) will tend to be located in the first positions of the blockmatrix, for example in the leftmost column of the blockmatrix for a blockmatrix with a structure similar to that of Figure 3. If the blockchains are not arranged in the predetermined order, the blockchains are reordered at item 150, for example using the block ordering algorithm.

Once the blockchains are arranged in order, the method of Figure 7 involves, at items 151 and 152 checking whether there are valid blocks in predetermined locations or positions within the data structure 116 for generating a hashblock at a particular position within the data structure 116 relative to the blocks. For example, methods such as Figure 7 may involve checking for valid blocks in positions neighbouring or adjacent to the position of a hashblock to be generated, for example with indices that are previous or subsequent to indices corresponding to or representing coordinates of the position of the hashblock to be generated.

In the example of Figure 7, in which the data structure is a three-dimensional blockmatrix, arranged in columns, rows and layers such as the blockmatrix of Figure 3, item 151 involves checking whether there is a valid block or hashblock to the front of the position of the hashblock to be generated. Such a check may involve identifying whether the block or hashblock includes valid data or merely null or unknown values. The coordinates of the current hashblock may be calculated based on the coordinates of the new block or hashblock, for example upon receipt of the new block. For example, the current hashblock to be generated may be located in the same row and column as the new block or hashblock but in an adjacent layer (for example in the second layer 126b rather than the first layer 126a as shown in Figure 4).

At item 152, the method of Figure 7 involves checking whether there is a valid block or hashblock in a different neighbouring position than that checked at item 151. In this example, the check at item 152 involves determining whether there is a valid block or hashblock to the front left of the position of the current hashblock in the blockmatrix. For example, referring back to Figure 4, upon receipt of the fourth block of the second blockchain (B₂₂), the checks at item 151 and 152 of Figure 7 may involve checking whether there is indeed a block to the front of the current hashblock to be generated (H2), and thus whether the blocks B₁₂ and B₂₂ of Figure 7 are present and include valid data rather than null values.

If one or both of these blocks or hashblocks are not present or are not valid, hashblock generation is ceased at item 154. At this stage, the first member node 102a may wait to receive an update from other member nodes of the DLN to fill in any missing blocks or hashblocks at the first member node 102a, before subsequently attempting to perform the hashblock generation again.

If blocks or hashblocks in the predetermined positions relative to the current hashblock to be generated (in this example, to the front and front left of the current hashblock to be generated) are present and valid, the method of Figure 7 involves, at item 156, checking whether there is a valid hashblock in a predetermined position or location relative to the position or location of the current hashblock within the data structure. In the example of Figure 7, item 156 includes checking whether there is a valid hashblock above the position of the current hashblock within the blockmatrix. If not, the blocks or hashblocks to the front and left of the current hashblock are hashed at item 158. In contrast, if there is a valid hashblock above the position of the current hashblock within the blockmatrix, the blocks or hashblocks to the front, left and above the current hashblock are hashed at item 160.

As will be appreciated, in other examples in which the method involves checking for blocks and/or hashblocks in other predetermined positions relative to the position of the current hashblock within the data structure, the hashes generated (for example corresponding to items 158 and 160 of Figure 7) may be generated using valid blocks and/or valid hashblocks at these other predetermined positions relative to the position of the current hashblock within the data structure.

Subsequently, at item 162 of Figure 7, a new hashblock is generated at the position of the current hashblock, thereby updating the data structure. The new hashblock for example includes the HashBlockIndex, HashVectorIndex, TimeStamp, HashChildren, PreviousHashData and HashData as described above. The HashBlockIndex is equal to the HashBlockIndex of the upper hashblock (the hashblock above the current hashblock in the blockmatrix) plus one (or 1 if there is no upper hashblock). The HashVectorIndex is equal to the HashVectorIndex of the upper hashblock (as they are both in the same column of the blockmatrix) or the VectorIndex of the new block (if there is no upper hashblock). The TimeStamp is the current time and the HashChildren are the front block or hashblock, the front left block or hashblock (and the upper hashblock if present). The PreviousHash is the HashData of the upper hashblock (or a random number if there is no upper hashblock). The HashData is equal to a hash of the hashes calculated at items 158 or 160 and the hash of (HashBlockIndex + HashVectorIndex + TimeStamp + HashChildren + PreviousHash) of the current hashblock, where the + symbol for example refers to a concatenation. This may be similar to the generated of the second hash H₂ shown in Figure 4.

A similar method may be used to generate further hash checks, which may be stored in additional layers of the blockmatrix (such as the fourth, sixth and seventh hashes H₄, H₆, H₇ illustrated in Figure 4). However, instead of taking front and front left blocks as an input, a current hashblock may be generated based on front and front left hashblocks as an input (as well as an upper hashblock if it exists).

As explained above, examples may involve creating a first block at the first member node 102a, receiving a first node identifier associated with the first member node 102a, selecting a first blockchain from a plurality of blockchains based on the first node identifier and extending the first blockchain by storing the first block as part of the first blockchain. Figure 8 illustrates an example of allocation of a first node identifier to the first member node 102a.

At item 164 of Figure 8, the first member node starts up, i.e. initializes. At item 166, the first member node generates a random number, such as a random universally unique identifier (UUID). At item 168, the first member node receives a timestamp from a server, such as an atomic timestamp server accessible to the first member node (which may also be accessible to other member nodes of the DLN). The timestamp for example represents a time associated with initializing the first member node and may be accurate to nanoseconds or picoseconds. The time represented by the timestamp may be measured using a synchronous time source, e.g. an atomic clock, at, or accessible to each member node, which provides a highly accurate time measurement, so that the node identifiers are unique. The atomic clock may for example be located in a control node accessible to member nodes of the DLN, which may be queried by the first member node during the initialization process. At item 170 of Figure 8, the first node identifier is generated based on an exact time associated with initializing the first member node, for example a point at which a specific routine is conducted during initialization. In this example, the first node identifier also includes a random number generated by the member node in order to decrease the chance of any two member nodes having the same node identifier (although the first node identifier may be generated based on the time of initializing without using the random number in other examples, providing time is measured using a sufficiently granular clock to ensure that two nodes are highly unlikely to receive the same node identifier). The first node identifier in Figure 8 is generated by concatenating the timestamp and the random number and is then allocated to the first member node at item 172. Thus, Figure 8 is an example of generating the first node identifier upon initialization of the first member node and, subsequently, allocating the first node identifier to the first member node based on time of initialization. Thus, when the node identifiers are ordered lowest-highest, the order is in a time-order.

There may be a plurality of control nodes, geographically spread, to provide service to member nodes which are in each respective geographic area. For example, a control node may supply a timestamp indicative of a time of initialization of a member node in the geographic area associated with the control node. By receiving a timestamp from clocks that are accurate and synchronous, such as atomic clocks, each member node may be able to generate an accurate, consistent node identifier based on time of initialization, which is consistent across the DLN, for example across different control nodes of the DLN. In other examples, though, a member node may retrieve or receive a node identifier from the control node rather than retrieving or receiving a timestamp from the control node.

Each member node is the sole source of blocks for a given blockvector within the blockmatrix, and each different member node is the respective sole source of blocks for a different blockvector within the matrix. For example, the first member node may be the sole source of all blocks in the first blockchain. A member node includes a module for accepting incoming requests for data to be published to the DLN. These requests may be sent locally at the DLN node, or may be sent from remote computing devices securely connected to the DLN node. For example, in a financial institution, such requests may comprise records of trades which can be originated in trade management systems connected to the member node via a corporate network administered by the financial institution, or another party on behalf of the financial institution. When the incoming request is accepted, the member node originates a block, including the data record and the hash performed on the data record and the hash stored in the previous block of the blockvector which the member node uses to add blocks to the blockmatrix. It subsequently transmits the newly-added block in synchronization data to other member nodes, hence publishing it to the network.

Thus, a member node may be responsible for originating all blocks in a single blockchain within the blockmatrix, and this is referred to herein as the member node's primary blockvector. Blockvectors originated by other member nodes, and received in synchronization data from the network, are referred to herein as a member node's secondary blockvectors. A member node's primary blockvector may be stored by the member node itself in its storage data.

By allowing a member node to be the sole source of blocks within the member node's primary blockvector (which may be considered to correspond to a member node's primary blockchain), blocks can be added to the DLN without delay and without the danger of collisions between blocks created on a different member nodes. Methods of controlling publication to a blockchain network involving competition between nodes, such as proof-of-work or other methods of cooperative publication of a single block or multiple blocks, are therefore not required. Furthermore, methods described herein also avoid the chance of forking and the complexities and delays associated with forking. These methods therefore provide a low-latency publication method, which may be useful if users require quick confirmation of a data record having been added to the DLN.

For example, a first continuous sequence of blocks created at the first member node may include a first block created at a first time and a subsequent block created at a subsequent time, the subsequent block positioned immediately subsequent to the first block in the first continuous sequence of blocks. A second continuous sequence of blocks created at the second member node may include a second block created at a second time between the first time and the subsequent time. In other words, blocks may be added to the first and second blockchains (which originate at the first and second member nodes) at different times from each other or at the same time as each other, without requiring a consensus-based algorithm for publication of blocks and still without risking sequence number collision, as each member node is the sole source for blocks of the member node's primary blockvector.

As described above, each member node 102 has a unique identity within the network, which is referred to herein as a VectorIndex. The primary blockvector of a member node may be associated with its network identity, in this case the VectorIndex, in order to uniquely identify the blockvector within the blockmatrix. A block within a blockvector may be identified by a sequence number, representing its position within the blockchain formed by the blockvector. Herein, the sequence number of a block within a blockvector is referred to as the BlockIndex.

Transactions, i.e. data records, may be identified in the distributed ledger either directly or indirectly, by lookup. Herein, a transaction identifier or transaction ID, which may be used to directly identify a block within the blockmatrix, and which is unique network-wide, is formed by concatenating the BlockIndex and the VectorIndex in a predetermined order. The transaction ID may be returned to the user as part of a receipt when a block is committed to the blockmatrix.

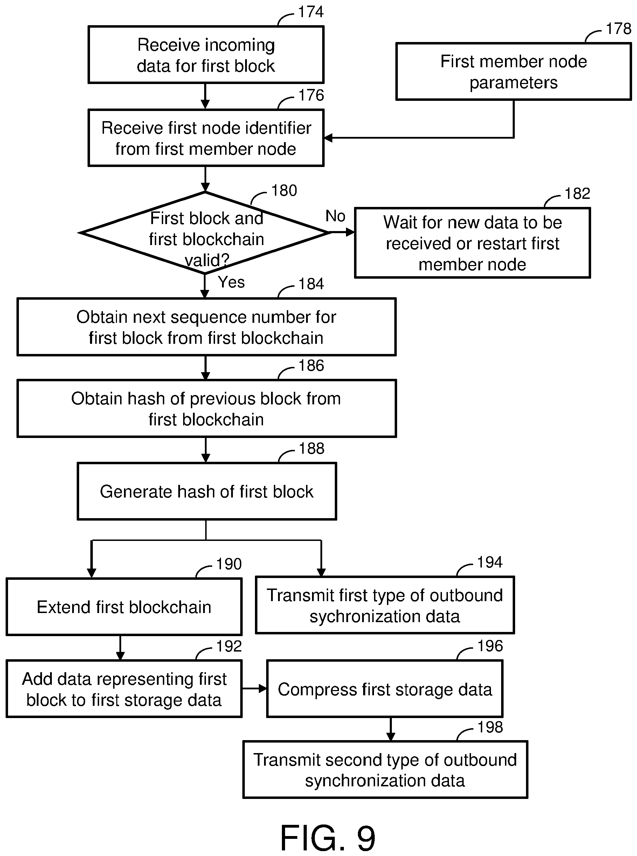

Figure 9 shows an example of extending a first blockchain in a DLN. The method of Figure 9 may be performed when a user attempts to create a new block at a member node of the DLN (in this example the first member node 102a). The method of Figure 9 involves checking the validity of the existing blockvector on the member node, which is for example the blockvector with a VectorIndex corresponding to the member node, i.e. with a node identifier associated with the member node. In this example, the method therefore involves checking the validity of the first blockvector, which corresponds to the first blockchain, on the first member node 102a. Providing the blockvector is valid, the first block is generated and the first blockchain is extended by adding the first block to the first blockchain. The first block, the updated first blockchain or the updated blockmatrix may then be broadcast to the DLN.

At item 174 of Figure 9, incoming data for a first block is received. The incoming data may be received within the first member node 102a, for example where the data is created at the first member node 102a and subsequently processed as shown in Figure 9. Alternatively, the incoming data may be received from another node of the DLN, for example as part of inbound synchronization data (as discussed further below).

At item 176 of Figure 9, a first node identifier is received from the first member node 102a. The first node identifier may be generated as described with reference to Figure 8. For example, the first node identifier may be generated based on first member node parameters as shown at item 178, such as a random number generated by the first member node 102a.

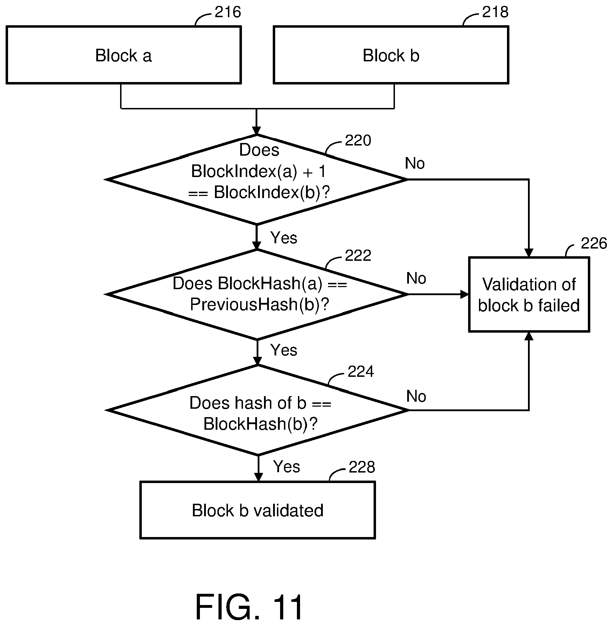

At item 180 of Figure 9, the validity of the first block and the first blockchain are checked. For example, the method of Figure 9 may involve, before extending the first blockchain, determining that the first block satisfies at least one block validity condition. Similarly, the method of Figure 9 may also or alternatively involve, before extending the first blockchain, determining that the first blockchain satisfies at least one blockchain validity condition. This is described further below with reference to Figure 11. Determining that a block satisfies at least one block validity condition as referred to herein may involve determining that the block satisfies all of a set of block validity conditions, where there may be one or more block validity conditions in the set of block validity conditions. For example, the set of block validity conditions may correspond to the minimum set of conditions for the block to be considered valid. Similarly, determining that a blockchain satisfies at least one blockchain validity condition as referred to herein may involve determining that the blockchain satisfies all of a set of blockchain validity conditions, where there may be one or more blockchain validity conditions in the set of blockchain validity conditions. The set of blockchain validity conditions may thus correspond to the minimum set of conditions for the blockchain to be considered valid.

If the first block (the data for which was received at item 174) or the first blockchain are not found to be valid, the method of Figure 9 involves, at item 182, waiting for new data to be received or restarting the first member node. In other words, if the first block or the first blockchain are invalid, the first block is not added to the first blockchain as this would destroy the validity of the first blockchain at the first member node 102a.

In contrast, if the first block and the first blockchain are determined to be valid, the first block may be added to the first blockchain. In the example method of Figure 9, this involves, at item 184, obtaining the next sequence number for the first block from the first blockchain. The next sequence number may be obtained from the first blockchain by incrementing the sequence number of the block at the end of the first blockchain (i.e. the most recently added block) by one.

At item 186 of Figure 9 a hash of the previous block (which in this example is the block at the end of the first blockchain) is obtained, for example using the method of Figure 5. The method of Figure 5 may also be used to generate the hash of the first block at item 188 of Figure 5. As will be appreciated, the other of the items of Figure 9 is merely illustrative and may differ in other examples. For example, item 186 may be performed after item 188.

After generating the hash of the previous block and the first block, various actions may be performed. For example, the first blockchain at the first member node 102a may be extended in response to the first block being created (item 190 of Figure 9), and data representing the first block may be added to the first storage data at item 192. In this way, the first storage data may be updated to represent the first blockchain after being extended.

The first block is then transmitted for synchronization with data stored at other member nodes of the DLN (item 194 of Figure 9). Note, that whilst synchronization is described in relation to one member node transmitting outbound synchronization data, and other nodes of the network receiving corresponding inbound synchronization data, it should be understood that each member node of the DLN performs similar methods of synchronization with respect to other member nodes of the DLN. Thus, each member node transmits outbound synchronization data to other nodes of the DLN, and each member node receives inbound synchronization data from other nodes of the DLN.

The first block may be transmitted as outbound synchronization data for receipt by at least one other member node of the DLN. According to a first method of synchronization, the outbound synchronization data in examples may include a first type of outbound synchronization data transmitted from a member node to other nodes, and a corresponding first type of inbound synchronization data received at a member node from other nodes. The first type of outbound synchronization data is transmitted at irregular intervals, synchronously with respect to the creation at blocks at the first member node, i.e. in response to each block being created at the first member node 102a. For example, the first type of outbound synchronization data may correspond to data representative of one new blocks, which may be transmitted to the other member nodes of the DLN upon creation of the new block. Thus, the first type of outbound synchronization data may be transmitted without delay to the other member nodes, so that data held at the other member nodes may be synchronized with the data held at the first member node 102a rapidly. This may help to improve the consistency between different member nodes of the DLN so that, at any given time, most or all of the member nodes store an up to date copy of the data structure.

According to a second method of synchronization, the outbound synchronization data in examples may include a second type of outbound synchronization data transmitted from a member node to other nodes, and a corresponding second type of inbound synchronization data received at a member node from other nodes. The second type of outbound synchronization data is transmitted at regular intervals, or at least at timings which are generally well-spaced, asynchronously with respect to the creation at blocks at the first member node. For example, item 196 of Figure 9 involves, after adding the data representing the first block to the first storage data, compressing the outbound synchronization data before transmitting the outbound synchronization data to the at least one other member node. Subsequently, at item 198 of Figure 9, the compressed outbound synchronization data may be transmitted to the at least one other member node. The second type of outbound synchronization data includes more information than the first type of outbound synchronization data, for example more than newly created blocks. For example, the second type of outbound synchronization data may include the entirety of the first blockchain or a continuous sequence of blocks of the first blockchain, or some or all of the blockmatrix or data structure including the first blockchain and the second blockchain, and verification data associated therewith, or only the first blockchain and verification data associated therewith. If for example at least every generation of hashblock data derived at least in part from the first blockchain is included, the integrity of the first blockchain can be verified at other nodes receiving the second type of synchronization data by recomputing the hashes in the hashblocks based on the first blockchain and blockchain data received from other nodes, and then comparing one or more of the computed values to the received values. The second type of outbound synchronization data may include all of the first storage data and the second storage data, or parts thereof. Transmission of the second type of outbound synchronization data may be performed at regular intervals, or at least at timings which are generally well-spaced, to allow the other member nodes of the DLN to allow data stored at the member nodes to be supplemented regularly, or at least at timings which are generally well-spaced by the second type of outbound synchronization data. Since the first type of outbound synchronization data may not arrive safely at any given member node (as any given transmission is not guaranteed to arrive if a connectionless protocol is used), the data stored at the given member node may become out of date, and it may not include newly created blocks represented by the first type of inbound synchronization data. However, the data stored at the given member node may then be updated upon receipt of the second type of inbound synchronization data.

Methods such as that of Figure 9 may involve detecting a synchronization trigger event, and in response to detecting the synchronization trigger event, transmitting the second type of outbound synchronization data to the at least one other member of the DLN. The synchronization trigger event may be associated with a regular time interval or a varying time interval which is asynchronous with respect to the creation of blocks on a member node (e.g. it may be a random time interval). The synchronization trigger may be associated with a command received from a control node of the DLN for the second type of outbound synchronization data to be transmitted.

The points in time at which the synchronization trigger event occurs may depend on the node identifier associated with the member node from which the second type of outbound synchronization data is transmitted (in this case, the first node identifier). As each member node has a different node identifier (which may be pseudo-random, for example based on a timestamp and a random number), transmitting the second type of outbound synchronization data at times depending on the node identifier may allow the second type of outbound synchronization data from various different member nodes to be spread across time, for example pseudo-randomly. This may help even out or balance the network load.

Examples may include transmission of only one of the first type of outbound synchronization data and the second type of outbound synchronization data. For example, the first type of outbound synchronization data may be transmitted upon the creation of a new block at a member node and the first type of outbound synchronization data may be retransmitted at regular intervals, or at least at timings which are generally well-spaced. Alternatively, the second type of outbound synchronization data may be transmitted at regular intervals, or at least at timings which are generally well-spaced, and the first method of synchronization may be omitted.

In the second method of synchronization, during a time interval between one outbound synchronization data transmission, and an immediately subsequent (i.e. next) outbound synchronization data transmission, a plurality of blocks of the first blockchain may be created. Thus, the second type of outbound synchronization data may not be transmitted each time a block is created at the first member node. In such cases, the subsequent outbound synchronization data may include data representing the plurality of blocks that have been created between one outbound synchronization data transmission and the subsequent outbound synchronization data transmission. For example, the second type of outbound synchronization data may include a blockmatrix (taken from the most recently updated first and second storage data) including the plurality of blocks that have been created between one second type of outbound synchronization data transmission and the subsequent second type of outbound synchronization data transmission.

In some examples, the first blockchain may be extended by adding a continuous sequence of blocks to the first blockchain during the time interval between one outbound synchronization data transmission and the subsequent outbound synchronization data transmission. The continuous sequence of blocks may be added to the first block in response to receiving a plurality of data records to be added to the DLN. As explained above with reference to Figure 9, the plurality of data records are typically created at the first member node 102a but may be received from an alternative source in some examples.

Transmission of both, or either of the first and second types of outbound synchronization data may include multicasting the outbound synchronization data to a plurality of member nodes of the DLN. For example, a member node which multicasts data such as the outbound synchronization data may broadcast the data to all member nodes of the DLN that are listening for multicast transmissions. Multicasting for example involves transmitting data to a group of destination computing devices (such as the member nodes of the DLN) using known multicasting protocols. Multicasting of the outbound synchronization data is performed using a connectionless protocol, such as the User Datagram Protocol (UDP). Multicasting therefore differs from peer-to-peer transmissions in which a member node transmitting outbound synchronization data must have a direct connection with each other peer (such as another member node of the DLN) in order to transmit the outbound synchronization data to that peer. The method of these examples thus provides much lower network overhead and utilization compared to existing DLN networks, in which significant overhead and utilization is required in the setting up and maintenance of peer-to-peer connections across the network. For example, UDP involves a so-called "fire and forget" method that occurs once. In contrast, a connection-oriented protocol such as the Transmission Control Protocol (TCP) requires a three stage handshake for a connection to be opened. Connection-oriented protocols therefore unicast data (and may thus be considered to involve injective or one-to-one transmissions) whereas a connectionless protocol such as UDP multicasts data, and may thus be considered one-to-many, with one member node transmitting data to a set of other member nodes. For example, UDP typically involves one broadcast whereas TCP generally involves multiple nodes connecting and disconnecting with each other and the same data being sent multiple times around a network.

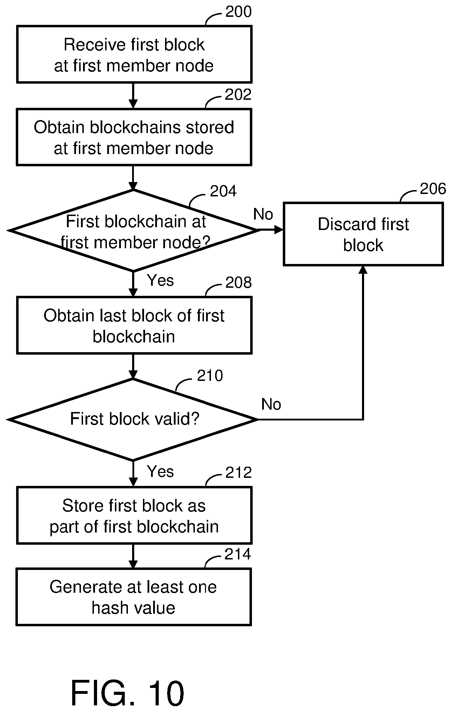

Figure 10 is a flow diagram illustrating the receipt of a first block at a first member node 102a according to examples. The method of Figure 10 may be performed when a new block (such as the first block) is received by a member node (such as the first member node) as inbound synchronization data from a different member node of the DLN or when the new block is created at the member node and received internally within the member node. In summary, the method of Figure 10 involves obtaining the parent blockvector (i.e. blockchain) for the new block from the member node (if it exists) and processing the new block to ensure it is valid before committing the new block to the blockvector. If the new block is found to be invalid or if the parent blockvector for the block is not stored at the member node, the new block is discarded.

At item 200 of Figure 10, the first block is received at the first member node 102a. At item 202, the blockchains stored at the first member node 102a are obtained (for example by obtaining the blockvectors of the first member node 102a). A check is performed at item 204 to determine whether the parent blockchain of the first block (in this example the first blockchain) is stored at the first member node 102a. If not, the first block is discarded at item 206.

If the first blockchain in this example is stored at the first member node 102a, the method of Figure 10 involves obtaining the last block of the first blockchain at item 208. For example, the last block of the first blockchain may be obtained by retrieving the block of the first blockchain with the largest BlockIndex. At item 210, it is determined whether the first block satisfies at least one validity condition. This is explained further below with reference to Figure 11. If the first block is found to be invalid, the first block is discarded at item 206. If, however, the first block is found to be valid, the first block is stored as part of the first blockchain at item 212. For example, the first blockchain may be extended by adding the first block to the end of the first blockchain. The first block, the updated first blockchain or the updated blockmatrix may then be broadcast or transmitted to at least one other member node of the DLN as described with reference to Figure 9. Finally, at item 214, at least one hash value is generated based on the updated first blockchain. The at least one hash value may be generated for example using the method of Figure 7.

An example of validation of a block will now be described with reference to Figure 11. The method of Figure 11 may be used to check whether two sequential blocks are valid and pass at least one validity condition for the two sequential blocks to be chained, for example to form a continuous sequence of two blocks as part of blockchain. In the example of Figure 11, the validity conditions for block *a* and block *b* to be valid (where block *b* comes after block *a* in a sequence of blocks) may be summarized as follows:
1. The BlockIndex of block *b* must equal the BlockIndex of block *a* + 1.
2. The PreviousHash stored in block *b* must equal the BlockHash of block *a.*
3. The hash of block *b* (generated by the method of Figure 5, for example) must equal the BlockHash of block *b.*

This can be seen from Figure 11, which involves receiving block *a* at item 216 and receiving block *b* at item 218. Item 220 involves checking criterion 1, item 222 involves checking criterion 2 and item 224 of Figure 11 involves checking criterion 4. If any of these criteria are failed, it is determined at item 226 of Figure 11 that the validation of block *b* has failed. Block *b* will therefore not be added to the blockchain including block *a.* Conversely, if these criteria are passed, at item 228 of Figure 11 it is determined that the validation of block *b* has succeeded. Block *b* may then be added to the blockchain including block *a.*

It is to be noted that the validation example of Figure 11 is merely illustrative. In some cases some of the validity conditions may be omitted or other validity conditions may be used instead. For example, in some cases methods described herein may include receiving a request to validate data on the first member node and, in response, processing the hash data to check whether the hash satisfies at least one hash validity condition. For example, this may involve checking criterion 3 without checking criteria 1 and 2.

A similar method to that of Figure 11 may be used to check the validity of a hashblock, for example to check that two sequential hashblocks in a hashvector are valid. For example, the validity conditions for hashblock *a* and hashblock *b* to be valid (where hashblock *b* comes after hashblock *a* in a sequence of hashblocks) may be summarized as follows:
1. The HashBlockIndex of hashblock *b* must equal the HashBlockIndex of block *a* + 1.
2. The PreviousHashData stored in hashblock *b* must equal the HashData of hashblock *a.*
3. The hash of hashblock *b* (generated by the method of Figure 6, for example) must equal the HashData of hashblock *b*.

As explained above for checking the validity of a block, though, in some cases some of these validity conditions may not be checked or different validity conditions may be used.

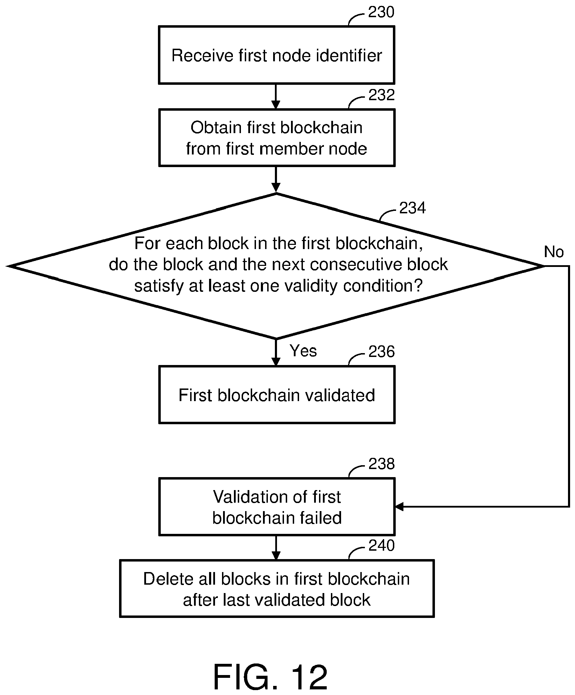

Figure 12 is a flow diagram illustrating an example of validation of a blockchain according to examples. The method of Figure 12 may be used to check the consistency and contents of a blockvector or blockchain based on the blocks of that blockchain independently of validating other blockvectors or hashvectors of a blockmatrix.

At item 230 of Figure 12, the VectorIndex of the blockvector to validate is received. In this instance, the first node identifier is received, as the first node identifier corresponds to the VectorIndex in this example. At item 232 of Figure 12, the first blockchain is obtained from the first member node 102a. At item 234 of Figure 12, the validity of individual blocks is checked, for example using the method of Figure 11 with two consecutive blocks of the first blockchain as inputs. If all of the blocks of the first blockchain satisfy the at least one block validity condition, the first blockchain is considered to satisfy the at least one blockchain validity condition and the first blockchain is validated at item 236 of Figure 12. If, however, one of the blocks of the first blockchain fails to satisfy the at least one block validity condition, the validation of the first blockchain fails at item 238. At item 240, all blocks in the first blockchain are then deleted after the last validated block. The first member node 102a may update the first blockchain at a later time, if the first member node 102a receives a copy of the first blockchain from another member node of the DLN that is validated according to the method of Figure 12.

The method of Figure 12 may be performed separately for some or all of the blockvectors or blockchains stored at a member node. For example, in response to receiving a request to validate data at the first member node 102a, the first storage data may be processed to check whether the first blockchain satisfies at least one blockchain validity condition and the second storage data may be processed to check whether the second blockchain satisfies the at least one blockchain validity condition.

Figure 13 is a flow diagram illustrating an example of receiving a new blockchain at a first member node, which may involve the validation methods described with reference to FIGS. 11 and 12. The method of Figure 13 may be performed when a new blockmatrix is received at a member node of the DLN that includes blockvectors that do not exist or that are not currently stored at the member node. First, the method of Figure 13 confirms that a blockvector of the blockmatrix is not present at the member node. Subsequently, the contents of the blockvector are validated as each block of the blockvector is saved to the member node.

Item 242 of Figure 13 represents a data structure stored on the first member node 102a of the DLN. The data structure for example stores a blockmatrix such as the blockmatrix of Figure 3. Item 244 represents a second blockchain, which may for example be represented by inbound synchronization data transmitted from the second member node 102b to the first member node 102a.

As described above for the outbound synchronization data, the inbound synchronization data may be a first type of inbound synchronization data or a second type of inbound synchronization data. The first type of inbound synchronization data for example represents one or more blocks of a blockchain created at a member node other than the member node receiving the inbound synchronization data. In the example in which the inbound synchronization data is received from the second member node 102b, the first type of inbound synchronization data may represent one or more blocks of the second blockchain that have been newly created at the second member node 102b. The first type of inbound synchronization data may be received at irregular intervals, for example when one or more new blocks of the second blockchain are created at the second member node 102b and transmitted to the first member node 102a (for example as the first type of outbound synchronization data). The second type of inbound synchronization data for example represents all or part of an entire set of the member nodes' blockchains, i.e. the blockmatrix. Where the first member node 102a includes a first version of the second storage data representing blocks of a first version of the second blockchain before receiving the inbound synchronization data, the second type of inbound synchronization data may include a second version of the second storage data representing blocks of a second version of the second blockchain. The second version of the second blockchain may be an updated version of the second blockchain compared with the first version of the second blockchain. In some cases, each member node of the blockchain includes a copy of all the blockchains within the DLN. In such cases, the second type of inbound synchronization data may include data representative of a copy of the blockchains of the DLN stored at a member node other than the member node receiving the second type of inbound synchronization data. As for second type of inbound synchronization data, the second type of inbound synchronization data may be received at regular intervals, or at least at timings which are generally well-spaced, by the first member node 102a, in response to regular or at least generally well-spaced transmissions of the second type of outbound synchronization data by the second member node 102b.

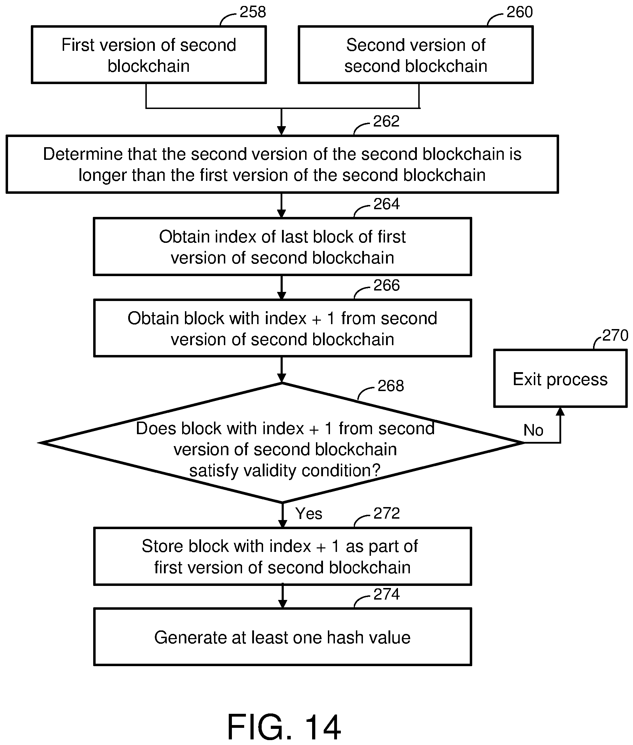

Item 246 of Figure 13 involves checking whether the second blockchain is stored on the first member node 102a. If the second blockchain is already stored on the first member node 102a, the process of Figure 13 is exited at item 248. In cases such as this, a different method can be used to update the data stored at the first member node 102a using the inbound synchronization data. For example, new blocks of the second blockchain that are not already present on the second blockchain of the first member node 102a may be added sequentially to the second blockchain of the first member node 102a as described further below with reference to Figure 14.

If the second blockchain is not stored on the first member node 102a, a new blockchain is created at item 250 of the method of Figure 13. The new blockchain may be created as a new blockvector in the blockmatrix with a VectorIndex equal to the VectorIndex associated with the second blockchain. The first block of the second blockchain (for example the block of the second blockchain with the lowest Blocklndex, which is for example positioned in the first row of the blockmatrix) is stored to the new blockchain at item 252 of Figure 13.

Subsequently, the validity of each subsequent block of the second blockchain is checked at item 254. Item 254 may involve checking whether each subsequent block of the second blockchain satisfies at least one validity condition, for example using the method of Figure 11. For each subsequent block, if the subsequent block of the second blockchain satisfies the at least one validity condition, the subsequent block is stored as part of the new blockchain at item 256 of Figure 11. This method may therefore involve creating or generating second storage data representing the blocks of the new blockchain (which in this example corresponds to the second blockchain received from the second member node 102b). If, however, a block of the second blockchain is found not to be valid, the process is exited at item 248.

Figure 14 is a flow diagram illustrating an example of updating a blockchain at a first member node. Before receiving inbound synchronization data in the example of Figure 14, the first member node 102a includes a first version of the second storage data representing blocks of a first version of a second blockchain (item 258 of Figure 14). The first member node 102a receives the inbound synchronization data from the second member node 102b at item 260 of Figure 14, which in this example is representative of blocks of a second version of the second blockchain. At item 262 of Figure 14 it is determined that the second version of the second blockchain is longer than the first version of the second blockchain. This may be performed by calculating the length of the first and second versions of the second blockvectors (which in this example correspond to the first and second versions of the second blockchain respectively) and comparing the respective lengths to ascertain that the second version of the second blockchain is longer than the first version of the second blockchain.

In examples such as Figure 14, the first version of the second blockchain may be updated based on the inbound synchronization data such that the second storage data is representative of the second version of the second blockchain, and similarly updated based on the inbound synchronization data such that the second storage data is representative of up-to-date, or near-up-to-date, versions of the primary blockchains of all other member nodes. The first version of the second blockchain may be updated without checking the validity of the inbound synchronization data. However, typically the validity of the inbound synchronization data is checked before the first version of the second blockchain is updated. Figure 14 shows such an example.

At item 264 of Figure 14, the index of the last block of the first version of the second blockchain is obtained. This index may be obtained by obtaining the largest BlockIndex of the first version of the second blockvector. At item 266 of Figure 14, the block with the index of the last block of the first version of the second blockchain incremented by one is obtained from the second version of the second blockchain. Then, at item 268, it is determined whether the block obtained at item 266 satisfies at least one validity condition, for example by using the block at item 266 and the block at item 264 as inputs to the method of Figure 11. If the block obtained at item 266 does not satisfy the at least one validity condition, the process is exited at block 270. If, however, the block obtained at item 266 does satisfy the at least one validity condition, this block is added to the first version of the second blockchain, for example at the end of the first version of the second blockchain, at item 272. The first version of the second blockchain may thus be updated, which may involve updating the second storage data. This method may be performed multiple times for each block of the second version of the second blockchain that isn't present in the first version of the second blockchain.

After updating the first version of the second blockchain for consistency with the second version of the second blockchain, the method of Figure 14 involves, at item 274, generating at least one hash value, for example using the method of Figure 7. However, in some examples, the generation of the at least one hash value may be omitted or may not be performed immediately after updating the first version of the second blockvector. For example, the generation of the at least one hash value may be performed intermittently, for example once a day, rather than each time the blockchains stored at the first member node 102a are updated or altered.

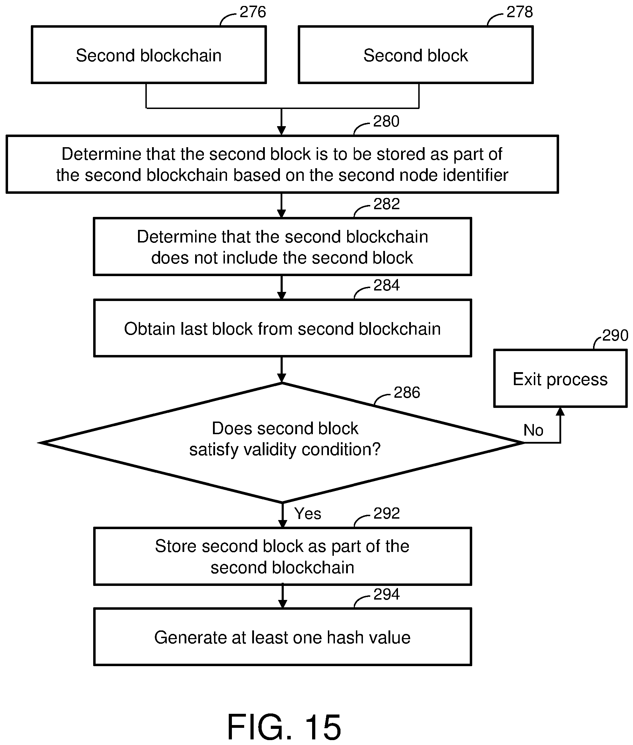

Figure 15 is a flow diagram illustrating an example of updating a blockchain at a second member node 102b of the DLN, for example to generate the inbound synchronization data that may be received by the first member node 102a.

The second member node 102b in Figure 15 includes a second blockchain (item 276), which in this example includes a continuous sequence of blocks created at the second member node 102b. Thus, in Figure 15, the second member node 102b is the sole source for blocks of the second blockchain.

In the method of Figure 15, a second block is created at the second member node 102b at item 278. At item 280, it is determined that the second block is to be stored as part of the second blockchain based on the second node identifier (as described above for storage of the first block as part of the first blockchain). At item 282, it is determined that the second blockchain does not include the second block. In other words, it is determined that the second block is a new block. At item 284, the last block of the second blockchain is obtained and is determined whether the second block satisfies at least one validity condition at item 286. For example, the determination of the validity of the second block may be performed by supplying the second block and the last block as inputs to the method of Figure 11.

If the second block does not satisfy the at least one validity condition, the process is exited at item 290. Thus, the second block is not stored as part of the second blockchain. If, however, the second block does satisfy the at least one validity condition, the second blockchain is extended by adding the second block to the second blockchain at item 292. Subsequently, at item 294, at least one hash value may be generated, for example using the method of Figure 7 (although this item may be omitted in some cases). The updated second blockchain (or solely the second block that has been added to the second blockchain) may then be transmitted to at least one other member node of the DLN as outbound synchronization data in order to synchronize data stored at the at least one other member node with that of the second member node 102b. The outbound synchronization data may be transmitted as described above and may therefore include other blockchains than the second blockchain, for example the entire blockmatrix including the second blockchain.

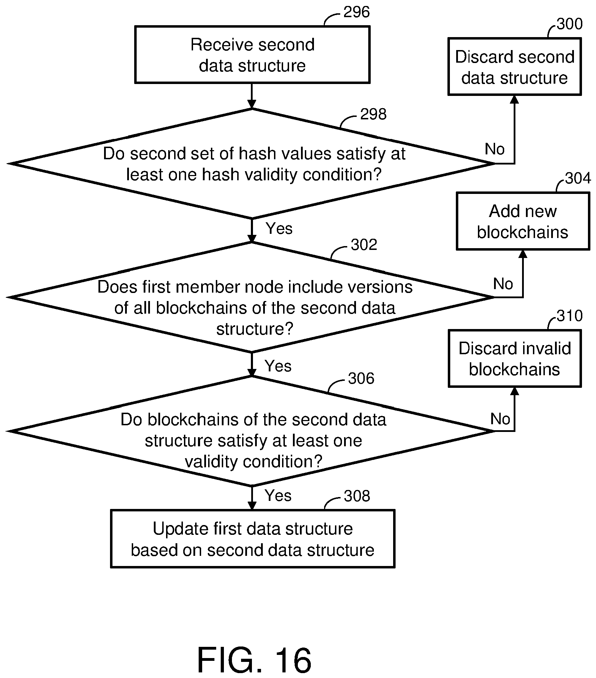

Figure 16 is a flow diagram illustrating an example of updating a data structure at a first member node. The method of Figure 16 may be used when a member node of the DLN receives a blockmatrix (or other data structure) from another member node of the DLN. The method of Figure 16 involves checking the validity of the new blockmatrix using the hashvectors and comparing the new blockmatrix to the blockmatrix on the member node, updating or adding new blockvectors or blocks as necessary.

At item 296 of Figure 16 a second data structure is received at the first member node 102a. In this example, the second data structure represents a second blockmatrix, whereas the first member node stores a first blockmatrix represented by storage data. At item 298 of Figure 16, a second set of hash values stored within the second data structure is checked to determine whether the second set of hash values satisfy at least one hash validity condition. For example, the second set of hash values may represent some or all of the hashblocks or hashvectors of the second blockmatrix (such as layers of the second blockmatrix other than the first layer, in examples in which the second blockmatrix has a structure similar to that of Figure 3). The validity of the second set of hash values may be checked by copying the blockvectors of the second blockmatrix to a temporary blockmatrix. The hashblocks of the second blockmatrix may then be re-generated using the blockvectors of the temporary blockmatrix (for example using the method of Figure 7). The re-generated hashblocks may then be compared with the hashblocks of the second blockmatrix. If they match, the second blockmatrix may be considered to be valid. Otherwise, the second blockmatrix may be considered to be invalid. Although in this case, the validity of the hashblocks of the second blockmatrix are checked when the second blockmatrix is newly received at the first member node of the DLN, in other cases the validity of hashblocks of a blockmatrix may be checked before a full blockmatrix is transmitted or broadcast to other member nodes of the DLN.

If the second set of hash values do not satisfy the at least one hash validity condition, the second data structure (in this example, the second blockmatrix) is discarded at item 300 of Figure 16. However, if the second set of hash values do satisfy the at least one hash validity condition, further validity checks are carried out including, at item 302, checking whether the first member node includes versions of all the blockchains of the second data structure. If not, new blockchains are added at item 304, for example using the method of Figure 13.

If the first member node does include versions of all of the blockchains of the second data structure, the method of Figure 16 involves checking, at item 306, whether the blockchains of the second data structure satisfy at least one validity condition, for example using the method of Figure 12. If the blockchains do satisfy the at least one validity condition, the first data structure (for example the first blockmatrix) is updated based on the second data structure at item 308. Otherwise, invalid blockchains are discarded at item 310.

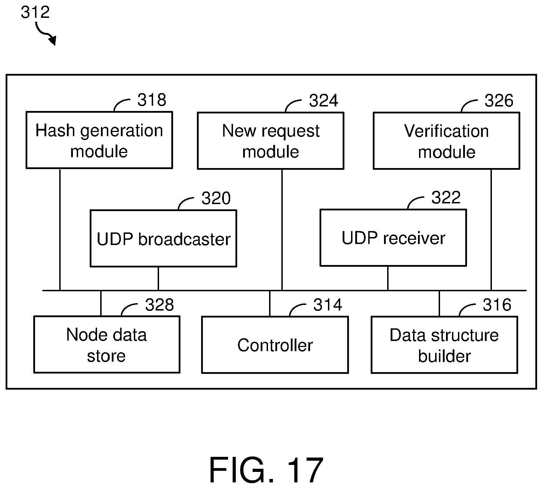

Figure 17 shows schematically an example of internal components of a member node 312 of a DLN according to examples. The member node includes a controller 314, a data structure builder 316 and a hash generation module 318. The data structure builder 316 and the hash generation module 318 of Figure 17 are shown as separate components to the controller 314. However, typically, the data structure builder 316 and the hash generation module 318 may be sub-components or sub-modules of the controller 314. The controller 314 may be configured or arranged to perform any of the methods described herein, and may select the appropriate method to perform based on requests received and the data type received.

The member node 312 of Figure 17 also includes a UDP broadcaster 320 for broadcasting data to other member nodes of the DLN using UDP and a UDP receiver 322 for receiving data from other member nodes of the DLN that has been broadcast using UDP. The UDP broadcaster 320 may include a compression module (not shown) for compressing data before transmission to the other member nodes and the UDP receiver 322 may include a decompression module (not shown) for decompressing compressed data received from the other member nodes.

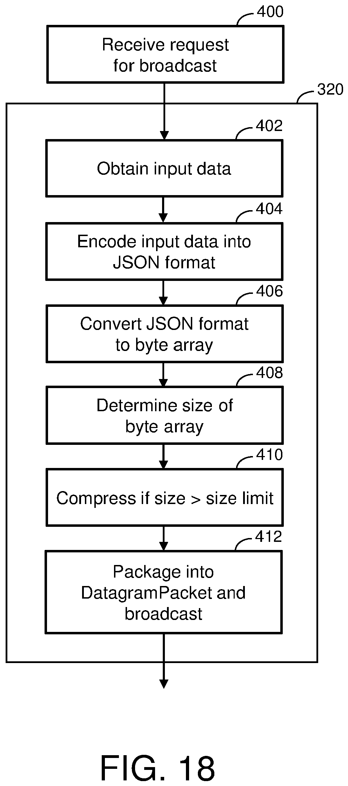

Typically, the UDP broadcaster 320 is capable of multicasting data in compressed or uncompressed formats, for example depending on the size of the data to be multicast. The UDP broadcaster 320 may additionally be capable of determining whether compression is to be applied dynamically, for example depending on the network capacity and the data size. The UDP broadcaster 320 may use a communications protocol such as Datagram Transport Layer Security (DTLS) for security and network layer consistency checking. A flow diagram illustrating broadcasting of data by the UDP broadcaster 320 is shown in Figure 18.

The UDP broadcaster 320 receives a request for data to be broadcast at item 400. The data to be broadcast is for example a block of a blockmatrix, a blockvector of a blockmatrix or a blockmatrix. Within the UDP broadcaster 320, the input data to be broadcast is obtained at item 402. At item 404, the input data is encoded into an appropriate format for broadcasting, such as the JavaScript Object Notation (JSON) format. The JSON format is converted to a byte array at item 406 and at item 408 the size of the byte array is determined. If the size of the byte array is larger than a size limit, the byte array is compressed at item 410. Finally, at item 412, the byte array is packaged into one or more datagram packets and broadcast by the UDP broadcaster 322.

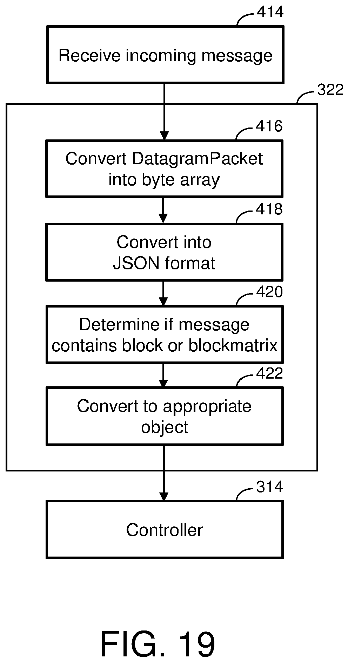

Figure 19 illustrates a flow diagram showing receipt of data using the UDP receiver 322. The UDP receiver 322 may be constantly or continuously listening for incoming messages. For example, when the member node 312 starts or initializes, the member node 312 may be predefined to listen to broadcasts on certain ports by default. Various network address translator (NAT) traversal techniques may be used to establish and maintain connections with member nodes of the DLN via gateways or routers that implement network address translation, for example for users of the DLN who are unable to open a router port. When a message is received, the message is decompressed if the message had previously been compressed, and converted into an appropriate format for further processing. Similarly to the UDP broadcaster 320, the UDP receiver 322 may use a communications protocol such as Datagram Transport Layer Security (DTLS) for security and network layer consistency checking.

At item 412 of Figure 19, the UDP receiver 322 receives an incoming message 414. At item 416, the datagram packet or datagram packets are converted into a byte array. At item 418, the byte array is converted to the JSON format. At item 420, it is determined if the incoming message includes a block or a blockmatrix and item 422 the incoming message is converted either to a block object or to a blockmatrix object depending on whether the incoming message includes a block or a blockmatrix. Finally, the block or blockmatrix object is transmitted to the controller 314, where it may be further processed. Thus, the UDP receiver 322 operates to reverse the processing applied by the UDP broadcaster 320, so that the received data is an appropriate format for the controller 314 to process. For example, if the incoming message includes a new block, the new block may be added one of the blockchains of a blockmatrix to extend the blockchain. Subsequently, the new block may be transmitted to other member nodes of the DLN (for example as a first type of outbound synchronization data) or the updated blockmatrix may be transmitted to the other member nodes (for example as a second type of outbound synchronization data), to synchronize the other member nodes with the member node 312, for example via the UDP broadcaster 320.

Referring back to Figure 17, the member node 312 includes a new request module 324. The new request module 324 is for example arranged to accept incoming data storage requests for data to be published to the DLN from a user associated with the member node 312. A data storage request is sent from the user's terminal, or a data processing system connected to the user's terminal, via a data communications link to the member node 312. The new request module 324 typically accepts data in a variety of formats, including raw text. However, where the original data is sensitive, the original data may be hashed (for example on a private network, which may be protected by a firewall outside which the member node 312 is located) and the hash of the data is sent to the new request module 324 in the data storage request. After receiving a data storage request, the new request module 324 generates a transaction ID as explained above. The data to be published to the DLN (typically along with the transaction ID) is transferred to the controller 314. The transaction ID is also sent back to the user who requested the publishing of the data to the DLN, for storage against the original data such that the original data can subsequently be verified by the submission of a verification request including the transaction ID, as will be explained below.

The member node 312 includes a verification check module 326, which may be used to handle requests from a user to verify data that has previously been committed to the DLN. A verification request is sent from the user's terminal, or a data processing system connected to the user's terminal, via a data communications link to the member node 312 associated with the user, and upon receipt, the verification request is passed to the verification check module 326. The verification check module 326 for example receives an incoming request for verification, which typically includes a transaction ID (for a transaction to be verified) and data to be verified. Again, where the original data is sensitive, the original data may have been hashed before storage on the DLN, thus a hash of the original data is generated before the verification request is sent, and the hash is sent to the verification check module 326 in the verification request. The request is then transferred to the controller 314 to retrieve the storage data for a given transaction ID. The retrieved data may then be compared against the data submitted in the request for verification and a result may be returned to the user which indicates whether the data to be verified has matched the data retrieved from the DLN.

The member node 312 also includes a node data store for storing local copies of the data structure, which may be shared with other member nodes of the DLN. For example, the node data store may include first storage for storing the first storage data for storing the primary blockvector (or blockchain) associated with that specific member node of the DLN, and second storage for storing the second storage data for storing blockvectors (or blockchains) associated with each of the other member nodes of the DLN. The first and second storage may be separate, or may be combined storage for storing the storage data representing all of the blockvectors (or blockchains), for example for storing the entire blockmatrix.

The components of the member node 312 may be interconnected using a systems bus such as the systems bus 120 described with reference to Figure 2. Instructions to implement the modules of the member node 312 may be stored in storage of the member node 312, which may be similar to or the same as the storage 108 described with reference to Figure 2. The node data store 328 may also form part of the storage 108. As noted above with reference to Figure 2, the instructions to implement these modules may be processed by at least one processor 118 so as to perform the methods of these modules. Any of the modules described herein may be implemented in software or in hardware or in a combination of software or hardware.

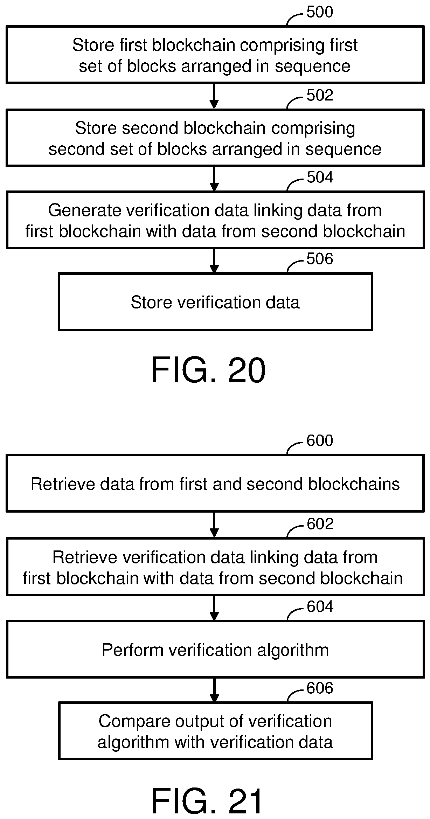

Figures 20 and 21 are flow diagrams illustrating features and aspects of the above-described examples. In particular, Figure 20 shows features and aspects of storing data according to these examples, and Figure 20 shows features and aspects of verifying data according to these examples. These features and aspects may be used in conjunction with all, or some, features and aspects of the above-described examples, or may be used independently or in other conjunction with other DLN methods and systems.

Referring now to Figure 20, at item 500, a first blockchain stored. The first blockchain includes a first set of blocks arranged in sequence. For example, the first set of blocks may be first consecutive series of blocks. At item 502 of Figure 20, a second blockchain is stored, which includes a second, different, set of blocks arranged in sequence. The first and second blockchains may be similar to the first and second blockchains described above, and may be generated independently, for example by different member nodes of the DLN.

At item 504 of Figure 20, verification data which links at least some data from a block in the first blockchain and at least some data from a block in the second blockchain is generated, and item 506 the verification data is stored, for example as part of a data structure such as the blockmatrix structure described above. The verification data may include a hash of at least some data from the block in the first blockchain and at least some data from the block in the second blockchain. The hash may for example be generated by supplying the data from the block in the first and second blockchains, respectively, as inputs to a hashing algorithm such as the MD5, SHA-256 or HMAC cryptographic hashing algorithms. In such example, the verification data may include a hash of at least a hash from the block in the first blockchain and at least a hash from the block in the second blockchain. For example, the respective blocks in the first and second blockchains may be hashed using the method of Figure. 5, and the verification data may then be generated by hashing the hashes of the blocks in the first and second blockchains using the method of Figure 6 (with the hashes of the blocks in the first and second blockchains used as the set of hash values received as input at item 138 of the method of Figure 6).

In order to generate the verification data, methods in accordance with Figure 20 may include selecting the block in the first blockchain and selecting the block in the second blockchain, wherein selecting the blocks in the first and second blockchains is performed on the basis of the blocks being in the same location in each respective sequence. As an illustrative example, if the first blockchain and the second blockchain correspond to the first and second blockvectors 122a, 122b of Figure 3, these methods may include selecting blocks of the first and second blockvectors 122a, 122b that have the same BlockIndex as each other.

In this way, methods in accordance with Figure 20 allow blocks of the same row, or at the same position of location within a sequence of blocks, of two different blockchains to be linked together. This can improve the immutability of the data stored within the blockchains. This is further improved by synchronizing the two blockchains, and the verification data, within a DLN, using for example the methods described above.

Referring now to Figure 21, at item 600, at least some data is retrieved from a block in a first blockchain and at least some data is retrieved from a block in a second blockchain. The first blockchain includes a first set of blocks arranged in sequence and the second blockchain includes a second, different, set of blocks arranged in sequence. Although Figure 21 shows the data being retrieved from the first and second blockchains as part of the same item, in other examples the data may be retrieved from the first and second blockchains separately, or at different points in time.

At item 602 of Figure 21, verification data which links the block in the first blockchain and the block in the second blockchain is retrieved. The verification data may be similar to the verification data described with reference to Figure 20.

At item 604 of Figure 21, a cryptographic verification algorithm is performed, with the at least some data from the block in the first blockchain and the at least some data from the block in the second blockchain as inputs to the cryptographic verification algorithm.

At item 606 of Figure 21, the output of the cryptographic verification algorithm is compared with the verification data in order to verify at least one of the block in the first blockchain and the block in the second blockchain.

The performing of the cryptographic verification algorithm may include performing a hashing algorithm with the at least some data from the block in the first blockchain and the at least some data from the block in the second blockchain as inputs to the hashing algorithm. For example, at least a hash from the block in the first blockchain and at least a hash from the block in the second blockchain may be used as inputs to the hashing algorithm. The cryptographic verification algorithm may therefore include generating a hash based on the at least some data from the block in the first blockchain and the at least some data from the block in the second blockchain and comparing this with a hash represented by the verification data. The verification data may for example correspond with a hashblock as described with reference to Figures 3 and 4, and the performing the cryptographic verification algorithm may correspond with regenerating the hashblock (for example using the method of Figure 7) and comparing the regenerated hashblock value with a hashblock value retrieved from the DLN. The cryptographic verification algorithm may be performed by the verification check module 326 illustrated in Figure 17.

Similarly to the method of Figure 20, methods in accordance with Figure 21 may include selecting the block in the first blockchain and selecting the block in the second blockchain, wherein selecting the blocks in the first and second blockchains is performed on the basis of the blocks being in the same location in each respective sequence. As an illustrative example, if the first blockchain and the second blockchain correspond to the first and second blockvectors 122a, 122b of Figure 3, these methods may include selecting blocks of the first and second blockvectors 122a, 122b that have the same BlockIndex as each other, and then verifying that the data in one or both of the blocks of the first and second blockvectors 122a, 122b have not been tampered with. This is for example for consistency with the generation of the verification data: the method of Figure 21 may aim to reproduce the verification data that may be generated using the method of Figure 20. If the output of the cryptographic verification algorithm of Figure 21 and the verification data of Figure 20 match, then at least one of the block in the first and second blockchains may be considered to be verified. In order to do this, the cryptographic verification algorithm may receive predetermined inputs that have been used to generate the verification data, for example on the basis of their positions in their respective sequences of blocks in the first and second blockchains.

Methods in accordance with Figure 21 therefore mean that data from first and second blockchains can be verified, with a higher level of immutability than if the first and second blockchains were not linked by the verification data.

The above examples are to be understood as illustrative examples. Further examples are envisaged. Although the example of Figure 3 illustrates the blockmatrix as being rectangular, this need not be the case in other examples. For example, some or all of the blockvectors and/or hashvectors may have different lengths. Furthermore, the number of layers may be different from the number of rows and/or number of columns.

In examples described above, a member node may be the sole source for blocks of a primary blockvector (or primary blockchain) associated with the member node. However, in other examples, there may be a plurality of member nodes of the DLN that act as a primary source for blocks of a primary blockvector or blockchain associated with the plurality of nodes of the DLN. In such cases, the data structure (such as a blockmatrix) may include a plurality of blockvectors, with each blockvector associated with a different subgroup of member nodes, with each subgroup of member nodes including one or more than one member node of the DLN. For example, a subgroup of member nodes may include a pair of member nodes. A subgroup of member nodes may communicate cooperatively to reserve sequence numbers in a blockchain (which may correspond with BlockIndex values for a blockvector) for records to be published to the DLN. For example, an organization may deploy such a subgroup of member nodes in order to improve the resilience of their member nodes.

Although examples described above refer to using a hashing algorithm to generate the verification data linking blocks of a blockchain together, in other examples other cryptographic algorithms may be used to generate the verification data. For example, blocks may be linked together by taking a hash value from a block of one blockchain, a hash value from a block in another blockchain and performing an encryption algorithm using the two hash values as inputs. The verification data may thus include an encrypted version of the two hash values, which may be decrypted and compared to the hash values stored in the blocks to verify the hash values. The hash values may then be compared to hash values regenerated from other data in the blocks to verify the respective blocks.

It is to be understood that any feature described in relation to any one example may be used alone, or in combination with other features described, and may also be used in combination with one or more features of any other of the examples, or any combination of any other of the examples. Furthermore, equivalents and modifications not described above may also be employed without departing from the scope of the accompanying claims.

## Claims

1. A method for synchronizing data within a distributed ledger network comprising a plurality of member nodes connected via a data communications system, the method comprising, at a first member node:
storing first storage data representing blocks of a first blockchain and second storage data representing blocks of at least a second blockchain;
extending the first blockchain in response to at least one block being created at said first member node,
adding data representing said at least one block to said first storage data;
transmitting outbound synchronization data to at least one other member node of the distributed ledger network, the outbound synchronization data comprising data representative of said at least one block;
receiving inbound synchronization data from a second member node of the distributed ledger network, the inbound synchronization data comprising data representative of one or more blocks of the second blockchain; and
adding the data representing said one or more blocks of the second blockchain to the second storage data,
wherein the method further comprises transmitting at least a given type of outbound synchronization data, transmissions of the given type of outbound synchronization data being separated by respective time intervals, wherein during a time interval between one, and the next transmission of the given type of outbound synchronization data, a plurality of blocks of said first blockchain are created, and wherein said next transmission comprises data representing said plurality of blocks.

2. The method according to claim 1, wherein extending the first blockchain comprises adding a continuous sequence of blocks to the first blockchain during said time interval in response to receiving a plurality of data records to be added to the distributed ledger network.

3. The method according to any preceding claim, wherein:
the outbound synchronization data includes a first type of outbound synchronization data, and
the given type of outbound synchronization data is a second type of outbound synchronization data, the second type of outbound synchronization data comprising the first storage data and the second storage data; and
the method comprises:
transmitting the first type of outbound synchronization data in response to the at least one block being created at said first member node;
detecting a synchronization trigger event, wherein the synchronization trigger event is asynchronous with respect to creation of blocks at the first member node; and
in response to detecting the synchronization event, transmitting the second type of outbound synchronization data.

4. The method according to any preceding claim, wherein:
before receiving the inbound synchronization data, the first member node comprises a first version of the second storage data representing blocks of a first version of the second blockchain;
the inbound synchronization data includes a second type of inbound synchronization data comprising a second version of the second storage data representing blocks of a second version of the second blockchain; and
the method comprises receiving the second type of inbound synchronization data from the second member node at regular intervals,
wherein optionally: the inbound synchronization data includes a first type of inbound synchronization data and the method comprises receiving the first type of inbound synchronization data at irregular intervals.

5. The method according to any preceding claim, wherein:
before receiving the inbound synchronization data, the first member node comprises a first version of the second storage data representing blocks of a first version of the second blockchain;
the inbound synchronization data is representative of blocks of a second version of the second blockchain; and
the method comprises:
determining that the second version of the second blockchain is longer than the first version of the second blockchain; and
updating the first version of the second blockchain based on the inbound synchronization data such that the second storage data is representative of the second version of the second blockchain.

6. The method according to any preceding claim, wherein the first storage data represents at least a first hash of a first data record of a first block of the first blockchain, the second storage data represents at least a second hash of a second data record of a second block of the second blockchain, and the method comprises:
processing the first storage data and the second storage data to generate hash data representative of a hash based on the first hash and the second hash.

7. The method according to claim 6, wherein:
the first storage data includes a first column of a plurality of columns of a multidimensional data structure comprising the first storage data, the second storage data and the hash data, which is to be found in a first layer of a plurality of layers of the multidimensional data structure and in a first number of rows of a plurality of rows of the multidimensional data structure, the first number of rows corresponding to a number of blocks of the first blockchain; and
the second storage data includes at least a second column of the plurality of columns, which is to be found in the first layer of the plurality of layers and in a second number of rows of the plurality of rows corresponding to a number of blocks of the second blockchain,
wherein the hash data is stored in a second layer of the plurality of layers different from the first layer and the hash data represents a hash value cross-linking the first block of the first blockchain with the second block of the second blockchain.

8. The method according to claim 6 or claim 7, comprising:
receiving a request to verify data on the first member node; and, in response:
processing the hash data to check whether the hash satisfies at least one hash validity condition;
processing the first storage data to check whether the first blockchain satisfies at least one blockchain validity condition; and
processing the second storage data to check whether the second blockchain satisfies the at least one blockchain validity condition.

9. The method according to any preceding claim, wherein the first blockchain comprises a first set of blocks arranged in sequence, and the second blockchain comprises a second, different, set of blocks arranged in sequence; and the method comprises:
using a cryptographic algorithm to generate verification data which links at least some data from a block in the first blockchain and at least some data from a block in the second blockchain, wherein the cryptographic algorithm comprises a hashing algorithm and the verification data comprises a hash of at least a hash from the block in the first blockchain and at least a hash from the block in the second blockchain and using the cryptographic algorithm comprises selecting the block in the first blockchain and selecting the block in the second blockchain, wherein selecting the blocks in the first and second blockchains is performed on the basis of the blocks being in the same location in each respective sequence;
storing the verification data; and
synchronizing the first block chain, the second blockchain and the verification data within a distributed ledger network.

10. The method according to claim 9, comprising:
retrieving at least some data from the block in the first blockchain
retrieving at least some data from the block in the second blockchain;
retrieving the verification data;
performing a cryptographic verification algorithm with the at least some data from the block in the first blockchain, and the at least some data from the block in the second blockchain, as inputs to the cryptographic verification algorithm, wherein performing the cryptographic verification algorithm comprises:
selecting the block in the first blockchain and selecting the block in the second blockchain, wherein selecting the blocks in the first and second blockchains is performed on the basis of the blocks being in the same location in each respective sequence; and
performing a hashing algorithm with at least a hash from the block in the first blockchain, and at least a hash from the block in the second blockchain, as inputs to the hashing algorithm; and
comparing the output of the cryptographic verification algorithm with the verification data in order to verify at least one of the block in the first blockchain and the block in the second blockchain.

11. The method according to any preceding claim, comprising:
receiving a first node identifier associated with the first member node;
selecting the first blockchain from the first blockchain and at least the second blockchain based on the first node identifier; and
in response to the selecting, performing the extending the first blockchain by storing the at least one block as part of the first blockchain.

12. The method according to claim 11, comprising:
generating the first node identifier upon initialization of the first member node based on a time associated with initializing the first member node, wherein optionally the time is measured using an atomic clock; and, subsequently,
allocating the first node identifier to the first member node.

13. A first member node for a distributed ledger network, wherein the first member node comprises:
storage configured to store:
first storage data representing a first blockchain, the first blockchain comprising a first continuous sequence of blocks, the first continuous sequence of blocks created at the first member node; and
second storage data representing at least a second blockchain, the second blockchain comprising a second continuous sequence of blocks, the second continuous sequence of blocks created at a second member node of the distributed ledger network; and
at least one processor communicatively coupled to the storage,
wherein the storage is configured to store computer program code configured to, when processed by the at least one processor, control the first member node to extend the first blockchain in response to at least one block being created at said first member node,add data representing said at least one block to said first storage data;
transmit outbound synchronization data to at least one other member node of the distributed ledger network, the outbound synchronization data comprising data representative of said at least one block;
receive inbound synchronization data from a second member node of the distributed ledger network, the inbound synchronization data comprising data representative of one or more blocks of the second blockchain; and
add the data representing said one or more blocks of the second blockchain to the second storage data, and
transmit at least a given type of outbound synchronization data to at least one other member node of the distributed ledger network, the outbound synchronization data comprising data representative of a first block of the first continuous sequence of blocks, transmissions of the given type of outbound synchronization data being separated by respective time intervals, wherein during a time interval between one, and the next transmission of the given type of outbound synchronization data, a plurality of blocks of said first blockchain are created, and wherein said next transmission comprises data representing said plurality of blocks.

14. The first member node according to claim 13, wherein:
the first continuous sequence of blocks comprises:
a first block created at a first time; and
a subsequent block created at a subsequent time, the subsequent block positioned immediately subsequent to the first block in the first continuous sequence of blocks; and
the second continuous sequence of blocks comprises;
a second block created at a second time between the first time and the subsequent time.

15. The first member node according to claim 13 or claim 14, wherein:
the storage is configured to store hash data representing a hash value cross-linking a first block of the first blockchain with a second block of the second blockchain,
the hash value is a first hash value representative of a first hash between the first block and the second block; and
the storage is configured to further store:
a set of hash data representative of a set of hash values comprising the first hash value and a second hash value representative of a second hash based on: the first hash, a third block of the first blockchain stored at a second position in the first blockchain and a fourth block of the second blockchain stored at the second position in the second blockchain;
third storage data representing a third continuous sequence of blocks of a third blockchain, the third continuous sequence of blocks created at a third member node of the distributed ledger network;
fourth hash data representative of a fourth hash value representative of a fourth hash between the first hash and a third hash between the second block of the second blockchain and a fifth block of the third blockchain with a first index; and
a data structure comprising the first storage data, the second storage data and the set of hash data.

## Patentansprüche

1. Verfahren zum Synchronisieren von Daten innerhalb eines Distributed-Ledger-Netzwerks, das mehrere Mitgliedsknoten umfasst, die über ein Datenkommunikationssystem verbunden sind, wobei das Verfahren an einem ersten Mitgliedsknoten Folgendes umfasst:
Speichern erster Speicherdaten, die Blöcke einer ersten Blockchain darstellen, und zweiter Speicherdaten, die Blöcke wenigstens einer zweiten Blockchain darstellen;
Erweitern der ersten Blockchain als Reaktion darauf, dass wenigstens ein Block an dem ersten Mitgliedsknoten erstellt wird,
Hinzufügen von Daten, die den wenigstens einen Block darstellen, zu den ersten Speicherdaten;
Übertragen ausgehender Synchronisationsdaten an wenigstens einen anderen Mitgliedsknoten des Distributed-Ledger-Netzwerks, wobei die ausgehenden Synchronisationsdaten Daten umfassen, die den wenigstens einen Block darstellen;
Empfangen eingehender Synchronisationsdaten von einem zweiten Mitgliedsknoten des Distributed-Ledger-Netzwerks, wobei die eingehenden Synchronisierungsdaten Daten umfassen, die einen oder mehrere Blöcke der zweiten Blockchain darstellen; und
Hinzufügen der Daten, die den einen oder die mehreren Blöcke der zweiten Blockchain darstellen, zu den zweiten Speicherdaten,
wobei das Verfahren ferner das Übertragen wenigstens einer gegebenen Art von ausgehenden Synchronisationsdaten umfasst, wobei Übertragungen der gegebenen Art von ausgehenden Synchronisationsdaten durch jeweilige Zeitintervalle getrennt sind, wobei während eines Zeitintervalls zwischen einer und der nächsten Übertragung der gegebenen Art von ausgehenden Synchronisationsdaten mehrere Blöcke der ersten Blockchain erstellt werden, und wobei die nächste Übertragung Daten umfasst, die die mehreren Blöcke darstellen.

2. Verfahren nach Anspruch 1, wobei das Erweitern der ersten Blockchain das Hinzufügen einer fortlaufenden Sequenz von Blöcken zu der ersten Blockchain während des Zeitintervalls als Reaktion auf das Empfangen mehrerer Datensätze, die zu dem Distributed-Ledger-Netzwerk hinzugefügt werden sollen, umfasst.

3. Verfahren nach einem vorhergehenden Anspruch, wobei:
die ausgehenden Synchronisationsdaten eine erste Art von ausgehenden Synchronisationsdaten einschließen, und
die gegebene Art von ausgehenden Synchronisationsdaten eine zweite Art von ausgehenden Synchronisationsdaten ist, wobei die zweite Art von ausgehenden Synchronisationsdaten die ersten Speicherdaten und die zweiten Speicherdaten umfasst; und
das Verfahren Folgendes umfasst:
Übertragen der ersten Art von ausgehenden Synchronisationsdaten als Reaktion darauf, dass der wenigstens eine Block an dem ersten Mitgliedsknoten erstellt wird;
Erfassen eines Synchronisationsauslösungsereignisses, wobei das Synchronisationsauslösungsereignis in Bezug auf die Erstellung von Blöcken an dem ersten Mitgliedsknoten asynchron ist; und
als Reaktion auf das Erfassen des Synchronisationsereignisses, Übertragen der zweiten Art von ausgehenden Synchronisationsdaten.

4. Verfahren nach einem vorhergehenden Anspruch, wobei:
vor dem Empfangen der eingehenden Synchronisationsdaten der erste Mitgliedsknoten eine erste Version der zweiten Speicherdaten umfasst, die Blöcke einer ersten Version der zweiten Blockchain darstellen;
die eingehenden Synchronisierungsdaten eine zweite Art von eingehenden Synchronisierungsdaten einschließen, die eine zweite Version der zweiten Speicherdaten umfassen, die Blöcke einer zweiten Version der zweiten Blockchain darstellen; und
das Verfahren das Empfangen der zweiten Art von eingehenden Synchronisierungsdaten von dem zweiten Mitgliedsknoten in regelmäßigen Intervallen umfasst,
wobei optional: die eingehenden Synchronisationsdaten eine erste Art von eingehenden Synchronisationsdaten einschließen und das Verfahren das Empfangen der ersten Art von eingehenden Synchronisierungsdaten in unregelmäßigen Intervallen umfasst.

5. Verfahren nach einem vorhergehenden Anspruch, wobei:
vor dem Empfangen der eingehenden Synchronisationsdaten der erste Mitgliedsknoten eine erste Version der zweiten Speicherdaten umfasst, die Blöcke einer ersten Version der zweiten Blockchain darstellen;
die eingehenden Synchronisationsdaten Blöcke einer zweiten Version der zweiten Blockchain darstellen; und
das Verfahren Folgendes umfasst:
Bestimmen, dass die zweite Version der zweiten Blockchain länger als die erste Version der zweiten Blockchain ist; und
Aktualisieren der ersten Version der zweiten Blockchain basierend auf den eingehenden Synchronisationsdaten derart, dass die zweiten Speicherdaten die zweite Version der zweiten Blockchain darstellen.

6. Verfahren nach einem der vorhergehenden Ansprüche, wobei die ersten Speicherdaten wenigstens einen ersten Hash eines ersten Datensatzes eines ersten Blocks der ersten Blockchain darstellen, wobei die zweiten Speicherdaten wenigstens einen zweiten Hash eines zweiten Datensatzes eines zweiten Blocks der zweiten Blockchain darstellen, und wobei das Verfahren Folgendes umfasst:
Verarbeiten der ersten Speicherdaten und der zweiten Speicherdaten, um Hash-Daten zu erzeugen, die einen Hash basierend auf dem ersten Hash und dem zweiten Hash darstellen.

7. Verfahren nach Anspruch 6, wobei:
die ersten Speicherdaten eine erste Spalte von mehreren Spalten einer mehrdimensionalen Datenstruktur einschließen, die die ersten Speicherdaten, die zweiten Speicherdaten und die Hash-Daten umfasst, die in einer ersten Schicht von mehreren Schichten der mehrdimensionalen Datenstruktur und in einer ersten Anzahl von Zeilen von mehreren Zeilen der mehrdimensionalen Datenstruktur zu finden sind, wobei die erste Anzahl von Zeilen einer Anzahl von Blöcken der ersten Blockchain entspricht; und
die zweiten Speicherdaten wenigstens eine zweite Spalte der mehreren Spalten einschließen, die in der ersten Schicht der mehreren Schichten und in einer zweiten Anzahl von Zeilen der mehreren Zeilen zu finden ist, die einer Anzahl von Blöcken der zweiten Blockchain entspricht,
wobei die Hash-Daten in einer zweiten Schicht der mehreren Schichten gespeichert sind, die sich von der ersten Schicht unterscheidet, und die Hash-Daten einen Hash-Wert darstellen, der den ersten Block der ersten Blockchain mit dem zweiten Block der zweiten Blockchain vernetzt.

8. Verfahren nach Anspruch 6 oder 7, das Folgendes umfasst:
Empfangen einer Anforderung, um Daten auf dem ersten Mitgliedsknoten zu verifizieren; und als Reaktion darauf:
Verarbeiten der Hash-Daten, um zu überprüfen, ob der Hash wenigstens eine Hash-Gültigkeitsbedingung erfüllt;
Verarbeiten der ersten Speicherdaten, um zu überprüfen, ob die erste Blockchain wenigstens eine Blockchain-Gültigkeitsbedingung erfüllt; und
Verarbeiten der zweiten Speicherdaten, um zu überprüfen, ob die zweite Blockchain die wenigstens eine Blockchain-Gültigkeitsbedingung erfüllt.

9. Verfahren nach einem der vorhergehenden Ansprüche, wobei die erste Blockchain einen ersten Satz von Blöcken umfasst, die in einer Sequenz angeordnet sind, und die zweite Blockchain einen zweiten, unterschiedlichen Satz von Blöcken umfasst, die in einer Sequenz angeordnet sind; und das Verfahren Folgendes umfasst:
Verwenden eines kryptografischen Algorithmus, um Verifizierungsdaten zu erzeugen, die wenigstens einige Daten aus einem Block in der ersten Blockchain und wenigstens einige Daten aus einem Block in der zweiten Blockchain verknüpfen, wobei der kryptographische Algorithmus einen Hash-Algorithmus umfasst und die Verifizierungsdaten einen Hash von wenigstens einem Hash von dem Block in der ersten Blockchain und wenigstens einem Hash von dem Block in der zweiten Blockchain umfassen und das Verwenden des kryptografischen Algorithmus ein Auswählen des Blocks in der ersten Blockchain und das Auswählen des Blocks in der zweiten Blockchain umfasst, wobei das Auswählen der Blöcke in der ersten und der zweiten Blockchain auf der Basis durchgeführt wird, dass sich die Blöcke an der gleichen Stelle in jeder jeweiligen Sequenz befinden;
Speichern der Verifizierungsdaten; und
Synchronisieren der ersten Blockchain, der zweiten Blockchain und der Verifizierungsdaten innerhalb eines Distributed-Ledger-Netzwerks.

10. Verfahren nach Anspruch 9, das Folgendes umfasst:
Abrufen wenigstens einiger Daten aus dem Block in der ersten Blockchain
Abrufen wenigstens einiger Daten aus dem Block in der zweiten Blockchain;
Abrufen der Verifizierungsdaten;
Durchführen eines kryptografischen Verifizierungsalgorithmus mit den wenigstens einigen Daten aus dem Block in der ersten Blockchain und den wenigstens einigen Daten aus dem Block in der zweiten Blockchain als Eingaben für den kryptografischen Verifizierungsalgorithmus, wobei das Durchführen des kryptografischen Verifizierungsalgorithmus Folgendes umfasst:
Auswählen des Blocks in der ersten Blockchain und Auswählen des Blocks in der zweiten Blockchain, wobei das Auswählen der Blöcke in der ersten und der zweiten Blockchain auf der Basis durchgeführt wird, dass sich die Blöcke an der gleichen Stelle in jeder jeweiligen Sequenz befinden; und
Durchführen eines Hash-Algorithmus mit wenigstens einem Hash aus dem Block in der ersten Blockchain und wenigstens einem Hash aus dem Block in der zweiten Blockchain als Eingaben für den Hash-Algorithmus; und
Vergleichen der Ausgabe des kryptografischen Verifizierungsalgorithmus mit den Verifizierungsdaten, um den Block in der ersten Blockchain und/oder den Block in der zweiten Blockchain zu verifizieren.

11. Verfahren nach einem vorhergehenden Anspruch, das Folgendes umfasst:
Empfangen eines ersten Knotenbezeichners, der dem ersten Mitgliedsknoten zugeordnet ist;
Auswählen der ersten Blockchain aus der ersten Blockchain und wenigstens der zweiten Blockchain basierend auf dem ersten Knotenbezeichner; und
als Reaktion auf das Auswählen, Durchführen des Erweiterns der ersten Blockchain durch Speichern des wenigstens einen Blocks als Teil der ersten Blockchain.

12. Verfahren nach Anspruch 11, das Folgendes umfasst:
Erzeugen des ersten Knotenbezeichners bei einer Initialisierung des ersten Mitgliedsknotens basierend auf einer Zeit, die dem Initialisieren des ersten Mitgliedsknotens zugeordnet ist, wobei optional die Zeit unter Verwendung einer Atomuhr gemessen wird; und anschließend,
Zuweisen des ersten Knotenbezeichners an den ersten Mitgliedsknoten.

13. Erster Mitgliedsknoten für ein Distributed-Ledger-Netzwerk, wobei der erste Mitgliedsknoten Folgendes umfasst:
einen Speicher, der konfiguriert ist, um Folgendes zu speichern:
erste Speicherdaten, die eine erste Blockchain darstellen, wobei die erste Blockchain eine erste fortlaufende Sequenz von Blöcken umfasst, wobei die erste fortlaufende Sequenz von Blöcken an dem ersten Mitgliedsknoten erstellt wird; und
zweite Speicherdaten, die wenigstens eine zweite Blockchain darstellen, wobei die zweite Blockchain eine zweite fortlaufende Sequenz von Blöcken umfasst, wobei die zweite fortlaufende Sequenz von Blöcken an einem zweiten Mitgliedsknoten des Distributed-Ledger-Netzwerks erstellt wird; und
wenigstens einen Prozessor, der mit dem Speicher kommunikativ gekoppelt ist,
wobei der Speicher für Folgendes konfiguriert ist: Speichern von Computerprogrammcode, der konfiguriert ist, um, wenn er durch den wenigstens einen Prozessor verarbeitet wird, den ersten Mitgliedsknoten zu steuern, um die erste Blockchain als Reaktion darauf, dass wenigstens ein Block an dem ersten Mitgliedsknoten erstellt wird, zu erweitern, Hinzufügen von Daten, die den wenigstens einen Block darstellen, zu den ersten Speicherdaten;
Übertragen ausgehender Synchronisationsdaten an wenigstens einen anderen Mitgliedsknoten des Distributed-Ledger-Netzwerks, wobei die ausgehenden Synchronisationsdaten Daten umfassen, die den wenigstens einen Block darstellen;
Empfangen eingehender Synchronisationsdaten von einem zweiten Mitgliedsknoten des Distributed-Ledger-Netzwerks, wobei die eingehenden Synchronisierungsdaten Daten umfassen, die einen oder mehrere Blöcke der zweiten Blockchain darstellen; und
Hinzufügen der Daten, die den einen oder die mehreren Blöcke der zweiten Blockchain darstellen, zu den zweiten Speicherdaten, und
Übertragen wenigstens einer gegebenen Art von ausgehenden Synchronisationsdaten an wenigstens einen anderen Mitgliedsknoten des Distributed-Ledger-Netzwerks, wobei die ausgehenden Synchronisationsdaten Daten umfassen, die einen ersten Block der ersten fortlaufenden Sequenz von Blöcken darstellen, wobei Übertragungen der gegebenen Art von ausgehenden Synchronisationsdaten durch jeweilige Zeitintervalle getrennt sind, wobei während eines Zeitintervalls zwischen einer und der nächsten Übertragung der gegebenen Art von ausgehenden Synchronisationsdaten mehrere Blöcke der ersten Blockchain erstellt werden, und wobei die nächste Übertragung Daten umfasst, die die mehreren Blöcke darstellen.

14. Erster Mitgliedsknoten nach Anspruch 13, wobei:
die erste fortlaufende Sequenz von Blöcken Folgendes umfasst:
einen ersten Block, der zu einem ersten Zeitpunkt erstellt wird; und
einen nachfolgenden Block, der zu einem nachfolgenden Zeitpunkt erstellt wird, wobei der nachfolgende Block unmittelbar nach dem ersten Block in der ersten fortlaufenden Sequenz von Blöcken positioniert ist; und
die zweite fortlaufende Sequenz von Blöcken Folgendes umfasst;
einen zweiten Block, der zu einem zweiten Zeitpunkt zwischen dem ersten Zeitpunkt und dem nachfolgenden Zeitpunkt erstellt wird.

15. Erster Mitgliedsknoten nach Anspruch 13 oder 14, wobei:
der Speicher konfiguriert ist, um Hash-Daten zu speichern, die einen Hash-Wert darstellen, der einen ersten Block der ersten Blockchain mit einem zweiten Block der zweiten Blockchain vernetzt,
der Hash-Wert ein erster Hash-Wert ist, der einen ersten Hash zwischen dem ersten Block und dem zweiten Block darstellt; und
der Speicher konfiguriert ist, um ferner Folgendes zu speichern:
einen Satz von Hash-Daten, der einen Satz von Hash-Werten darstellt, der den ersten Hash-Wert und einen zweiten Hash-Wert umfasst, der einen zweiten Hash darstellt, basierend auf Folgendem: dem ersten Hash, einem dritten Block der ersten Blockchain, der an einer zweiten Position in der ersten Blockchain gespeichert ist, und einem vierten Block der zweiten Blockchain, der an der zweiten Position in der zweiten Blockchain gespeichert ist;
dritte Speicherdaten, die eine dritte fortlaufende Sequenz von Blöcken einer dritten Blockchain darstellen, wobei die dritte fortlaufende Sequenz von Blöcken an einem dritten Mitgliedsknoten des Distributed-Ledger-Netzwerks erstellt wird;
vierte Hash-Daten, die einen vierten Hash-Wert darstellen, der einen vierten Hash zwischen dem ersten Hash und einem dritten Hash zwischen dem zweiten Block der zweiten Blockchain und einem fünften Block der dritten Blockchain mit einem ersten Index darstellt; und
eine Datenstruktur, die die ersten Speicherdaten, die zweiten Speicherdaten und den Satz von Hash-Daten umfasst.

## Revendications

1. Procédé de synchronisation de données au sein d'un réseau de grand livre distribué comprenant une pluralité de nœuds membres connectés par l'intermédiaire d'un système de communication de données, le procédé comprenant, au niveau d'un premier nœud membre :
le stockage des premières données de stockage représentant des blocs d'une première chaîne de blocs et des secondes données de stockage représentant des blocs d'au moins une seconde chaîne de blocs ;
l'extension de la première chaîne de blocs en réponse à la création d'au moins un bloc au niveau dudit premier nœud membre,
l'ajout des données représentant ledit au moins un bloc auxdites premières données de stockage ;
la transmission des données de synchronisation sortantes à au moins un autre nœud membre du réseau de grand livre distribué, les données de synchronisation sortantes comprenant des données représentatives dudit au moins un bloc ;
la réception des données de synchronisation entrantes d'un second nœud membre du réseau de grand livre distribué, les données de synchronisation entrantes comprenant des données représentatives d'un ou plusieurs blocs de la seconde chaîne de blocs ; et
l'ajout des données représentant lesdits un ou plusieurs blocs de la seconde chaîne de blocs aux secondes données de stockage,
le procédé comprenant en outre la transmission d'au moins un type donné de données de synchronisation sortantes, les transmissions du type donné de données de synchronisation sortantes étant séparées par des intervalles de temps respectifs, pendant un intervalle de temps entre une et la transmission suivante du type donné de données de synchronisation sortantes, une pluralité de blocs de ladite première chaîne de blocs est créée, et ladite transmission suivante comprenant des données représentant ladite pluralité de blocs.

2. Procédé selon la revendication 1, l'extension de la première chaîne de blocs comprenant l'ajout d'une séquence continue de blocs à la première chaîne de blocs pendant ledit intervalle de temps en réponse à la réception d'une pluralité d'enregistrements de données à ajouter au réseau de grand livre distribué.

3. Procédé selon l'une quelconque des revendications précédentes :
les données de synchronisation sortantes comportant un premier type de données de synchronisation sortantes, et
le type donné de données de synchronisation sortantes étant un second type de données de synchronisation sortantes, le second type de données de synchronisation sortantes comprenant les premières données de stockage et les secondes données de stockage ; et
le procédé comprenant :
la transmission du premier type de données de synchronisation sortantes en réponse à l'au moins un bloc en cours de création au niveau dudit premier nœud membre ;
la détection d'un événement de déclenchement de synchronisation, l'événement de déclenchement de synchronisation étant asynchrone par rapport à la création de blocs au niveau du premier nœud membre ; et
en réponse à la détection de l'événement de synchronisation, la transmission du second type de données de synchronisation sortantes.

4. Procédé selon l'une quelconque des revendications précédentes :
avant de recevoir les données de synchronisation entrantes, le premier nœud membre comprenant une première version des secondes données de stockage représentant des blocs d'une première version de la seconde chaîne de blocs ;
les données de synchronisation entrantes comportant un second type de données de synchronisation entrantes comprenant une seconde version des secondes données de stockage représentant des blocs d'une seconde version de la seconde chaîne de blocs ; et
le procédé comprenant la réception du second type de données de synchronisation entrantes du second nœud membre à intervalles réguliers,
éventuellement : les données de synchronisation entrantes comportant un premier type de données de synchronisation entrantes et le procédé comprenant la réception du premier type de données de synchronisation entrantes à des intervalles irréguliers.

5. Procédé selon l'une quelconque des revendications précédentes :
avant de recevoir les données de synchronisation entrantes, le premier nœud membre comprenant une première version des secondes données de stockage représentant des blocs d'une première version de la seconde chaîne de blocs ;
les données de synchronisation entrantes étant représentatives de blocs d'une seconde version de la seconde chaîne de blocs ; et
le procédé comprenant :
la détermination que la seconde version de la seconde chaîne de blocs est plus longue que la première version de la seconde chaîne de blocs ; et
la mise à jour de la première version de la seconde chaîne de blocs sur la base des données de synchronisation entrantes de telle sorte que les secondes données de stockage sont représentatives de la seconde version de la seconde chaîne de blocs.

6. Procédé selon l'une quelconque des revendications précédentes, les premières données de stockage représentant au moins un premier hachage d'un premier enregistrement de données d'un premier bloc de la première chaîne de blocs, les secondes données de stockage représentant au moins un second hachage d'un second enregistrement de données d'un second bloc de la seconde chaîne de blocs, et le procédé comprenant :
le traitement des premières données de stockage et des secondes données de stockage pour générer des données de hachage représentatives d'un hachage sur la base du premier hachage et du second hachage.

7. Procédé selon la revendication 6 :
les premières données de stockage comportant une première colonne d'une pluralité de colonnes d'une structure de données multidimensionnelles comprenant les premières données de stockage, les secondes données de stockage et les données de hachage, qui doivent être trouvées dans une première couche d'une pluralité de couches d'une structure de données multidimensionnelles et dans un premier nombre de lignes d'une pluralité de lignes de la structure de données multidimensionnelles, le premier nombre de lignes correspondant à un certain nombre de blocs de la première chaîne de blocs ; et
les secondes données de stockage comportant au moins une seconde colonne de la pluralité de colonnes, qui se trouve dans la première couche de la pluralité de couches et dans un second nombre de lignes de la pluralité de lignes correspondant à un nombre de blocs de la seconde chaîne de blocs,
dans lequel les données de hachage sont stockées dans une seconde couche de la pluralité de couches différentes de la première couche et les données de hachage représentent une valeur de hachage réticulant le premier bloc de la première chaîne de blocs avec le second bloc de la seconde chaîne de blocs.

8. Procédé selon la revendication 6 ou 7, comprenant :
la réception d'une demande de vérification des données sur le premier nœud membre ; et, en réponse :
le traitement des données de hachage pour vérifier si le hachage satisfait au moins une condition de validité de hachage ;
le traitement des premières données de stockage pour vérifier si la première chaîne de blocs satisfait au moins une condition de validité de chaîne de blocs ; et
le traitement des secondes données de stockage pour vérifier si la seconde chaîne de blocs satisfait à l'au moins une condition de validité de chaîne de blocs.

9. Procédé selon l'une quelconque des revendications précédentes, la première chaîne de blocs comprenant un premier ensemble de blocs disposés en séquence, et la seconde chaîne de blocs comprenant un second ensemble, différent, de blocs disposés en séquence ; et le procédé comprenant :
l'utilisation d'un algorithme cryptographique pour générer des données de vérification qui relient au moins certaines données d'un bloc dans la première chaîne de blocs et au moins certaines données d'un bloc dans la seconde chaîne de blocs, l'algorithme cryptographique comprenant un algorithme de hachage et les données de vérification comprenant un hachage d'au moins un hachage du bloc dans la première chaîne de blocs et au moins un hachage du bloc dans la seconde chaîne de blocs et l'utilisation de l'algorithme cryptographique comprenant la sélection du bloc dans la première chaîne de blocs et la sélection du bloc dans la seconde chaîne de blocs, la sélection des blocs dans les première et seconde chaînes de blocs étant effectuées sur la base du fait que les blocs se trouvent au même emplacement dans chaque séquence respective ;
le stockage des données de vérification ; et
la synchronisation de la première chaîne de blocs, de la seconde chaîne de blocs et des données de vérification au sein d'un réseau de grand livre distribué.

10. Procédé selon la revendication 9, comprenant :
la récupération d'au moins quelques données du bloc dans la première chaîne de blocs ;
la récupération d'au moins certaines données du bloc dans la seconde chaîne de blocs ;
la récupération des données de vérification ;
l'exécution d'un algorithme de vérification cryptographique avec les au moins certaines données du bloc dans la première chaîne de blocs, et les au moins certaines données du bloc dans la seconde chaîne de blocs, en tant qu'entrées de l'algorithme de vérification cryptographique, la réalisation de l'algorithme de vérification cryptographique comprenant :
la sélection du bloc dans la première chaîne de blocs et la sélection du bloc dans la seconde chaîne de blocs, la sélection des blocs dans les première et seconde chaînes de blocs étant effectuée sur la base du fait que les blocs se trouvent au même emplacement dans chaque séquence respective ; et
l'exécution d'un algorithme de hachage avec au moins un hachage du bloc dans la première chaîne de blocs, et au moins un hachage du bloc dans la seconde chaîne de blocs, en tant qu'entrées de l'algorithme de hachage ; et
la comparaison de la sortie de l'algorithme de vérification cryptographique avec les données de vérification afin de vérifier au moins l'un du bloc dans la première chaîne de blocs et du bloc dans la seconde chaîne de blocs.

11. Procédé selon l'une quelconque des revendications précédentes, comprenant :
la réception d'un premier identifiant de nœud associé au premier nœud membre ;
la sélection de la première chaîne de blocs à partir de la première chaîne de blocs et d'au moins la seconde chaîne de blocs sur la base du premier identifiant de noeud ; et
en réponse à la sélection, la réalisation de l'extension de la première chaîne de blocs en stockant l'au moins un bloc en tant que partie de la première chaîne de blocs.

12. Procédé selon la revendication 11, comprenant :
la génération du premier identifiant de nœud lors de l'initialisation du premier nœud membre sur la base d'un temps associé à l'initialisation du premier nœud membre, éventuellement le temps étant mesuré en utilisant une horloge atomique ; et, par la suite,
l'attribution du premier identifiant de nœud au premier nœud membre.

13. Premier nœud membre pour un réseau de grand livre distribué, le premier nœud membre comprenant :
le stockage configuré pour stocker :
des premières données de stockage représentant une première chaîne de blocs, la première chaîne de blocs comprenant une première séquence continue de blocs, la première séquence continue de blocs créée au niveau du premier nœud membre ; et
des secondes données de stockage représentant au moins une seconde chaîne de blocs, la seconde chaîne de blocs comprenant une seconde séquence continue de blocs, la seconde séquence continue de blocs créée au niveau d'un second nœud membre du réseau de grand livre distribué ; et
au moins un processeur couplé en communication au stockage,
le stockage étant configuré pour stocker un code de programme informatique configuré pour, lorsqu'il est traité par l'au moins un processeur, commander le premier nœud membre pour étendre la première chaîne de blocs en réponse à la création d'au moins un bloc au niveau dudit premier nœud membre, ajouter des données représentant ledit au moins un bloc vers lesdites premières données de stockage ;
transmettre des données de synchronisation sortantes à au moins un autre nœud membre du réseau de grand livre distribué, les données de synchronisation sortantes comprenant des données représentatives dudit au moins un bloc ;
recevoir des données de synchronisation entrantes d'un second nœud membre du réseau de grand livre distribué, les données de synchronisation entrantes comprenant des données représentatives d'un ou plusieurs blocs de la seconde chaîne de blocs ; et
ajouter les données représentant lesdits un ou plusieurs blocs de la seconde chaîne de blocs aux secondes données de stockage, et
transmettre au moins un type donné de données de synchronisation sortantes à au moins un autre nœud membre du réseau de grand livre distribué, les données de synchronisation sortantes comprenant des données représentatives d'un premier bloc de la première séquence continue de blocs, les transmissions du type donné des données de synchronisation sortante étant séparées par des intervalles de temps respectifs, pendant un intervalle de temps entre une transmission et la prochaine transmission du type donné de données de synchronisation sortantes, une pluralité de blocs de ladite première chaîne de blocs étant créée, et ladite transmission suivante comprenant des données représentant ladite pluralité de blocs.

14. Premier nœud membre selon la revendication 13 :
la première séquence continue de blocs comprend :
un premier bloc créé dans un premier temps ; et
un bloc suivant créé à un moment ultérieur, le bloc suivant étant positionné immédiatement après le premier bloc dans la première séquence continue de blocs ; et
la seconde séquence continue de blocs comprend ;
un second bloc créé à un second temps entre le premier temps et le temps suivant.

15. Premier nœud membre selon la revendication 13 ou la revendication 14 :
le stockage étant configuré pour stocker des données de hachage représentant une valeur de hachage réticulant un premier bloc de la première chaîne de blocs avec un second bloc de la seconde chaîne de blocs,
la valeur de hachage étant une première valeur de hachage représentative d'un premier hachage entre le premier bloc et le second bloc ; et
le stockage est configuré pour stocker davantage :
un ensemble de données de hachage représentatif d'un ensemble de valeurs de hachage comprenant la première valeur de hachage et une seconde valeur de hachage représentative d'un second hachage basé sur : le premier hachage, un troisième bloc de la première chaîne de blocs stockés à une seconde position dans la première chaîne de blocs et un quatrième bloc de la seconde chaîne de blocs stocké à la seconde position dans la seconde chaîne de blocs ;
des troisièmes données de stockage représentant une troisième séquence continue de blocs d'une troisième chaîne de blocs, la troisième séquence continue de blocs créée au niveau d'un troisième nœud membre du réseau de grand livre distribué ;
des quatrièmes données de hachage représentatives d'une quatrième valeur de hachage représentative d'un quatrième hachage entre le premier hachage et un troisième hachage entre le deuxième bloc de la deuxième chaîne de blocs et un cinquième bloc de la troisième chaîne de blocs avec un premier index ; et
une structure de données comprenant les premières données de stockage, les secondes données de stockage et l'ensemble de données de hachage.
